# EUROPEAN PATENT SPECIFICATION

(11) **EP 1 987 406 B1**
(45) Date of publication and mention of the grant of the patent: **04.08.2010**
(21) Application number: 07704633.2
(22) Date of filing: 19.02.2007
(51) Int. Cl.: G05B 19/423, B25J 13/02, B25J 9/08, B25J 9/16

(54) **A SYSTEM FOR CONTROLLING THE POSITION AND ORIENTATION OF AN OBJECT IN DEPENDENCE ON RECEIVED FORCES AND TORQUES FROM A USER**
SYSTEM ZUR STEUERUNG DER POSITION UND ORIENTIERUNG EINES OBJEKTS JE NACH VON EINEM BENUTZER EMPFANGENEN KRÄFTEN UND DREHMOMENTEN
SYSTEME DE COMMANDE DE LA POSITION ET DE L'ORIENTATION D'UN OBJET EN FONCTION DE FORCES ET DE COUPLES REÇUS D'UN UTILISATEUR

(30) Priority: 23.02.2006 US 775781 P
(43) Date of publication of application: 05.11.2008
(73) Proprietor: ABB AB, 721 78 Västerås (SE)
(72) Inventor: BROGÅRDH, Torgny, S-724 79 Västerås (SE)
(86) International application number: PCT/EP2007/051549
(87) International publication number: WO 2007/096322

(56) References cited:
- EP-A1- 0 333 872
- EP-A2- 0 210 717
- DE-A1- 3 211 992
- DE-A1- 3 836 003
- DE-A1- 19 943 318
- US-A- 4 589 810
- US-B1- 6 385 508
- DAO D V; TORIYAMA T; WELLS J C; SUGIYAMA S: "Silicon Piezoresistive 6-DOF Micro Force-Moment Sensing Chip and Application to Fluid Dynamics"[Online] 31 December 2001 (2001-12-31), XP002447657 Retrieved from the Internet: URL:http://www.ritsumei.ac.jp/acd/cg/se/rt /mems/report/FirstSymposium/proc/Dzung-Mic roForce.pdf> [retrieved on 2007-08-22] cited in the application
- DAO D V ET AL: "A mems-based microsensor to measure all six componets of force and moment on a near-wall particle in turbulent flow" 9 June 2003 (2003-06-09), TRANSDUCERS, SOLID-STATE SENSORS, ACTUATORS AND MICROSYSTEMS, 12TH INNATIONAL CONFERENCE ON, 2003, PISCATAWAY, NJ, USA,IEEE, PAGE(S) 504-507 , XP010646396 ISBN: 0-7803-7731-1 the whole document

## Description

### FIELD OF THE INVENTION

The present invention relates to a system for controlling the position and orientation of an object in dependence on received forces and torques from a user. The system is used by a human operator to control the position and orientation of an object, which can be a real object, for instance manipulated by an industrial robot, or a virtual object on a computer screen. The system is, for example, useful in a joystick controlling an object on a computer screen, or for controlling a tool or a work object manipulated by an industrial robot in connection with lead-through programming of the robot. It can also be used in other applications where manipulation in several degrees of freedom is necessary, as for example for telemetry operated robots, which are needed in hazardous environment, in sub sea vehicles, on excavation machines, in surgery equipment, in space stations and vehicles etc. Even if the invention has its main applications for human machine interaction it can also be used for process control and supervision, for example during grinding with a robot.

### PRIOR ART

Because of the complexity of robot programming, it is difficult for small and medium sized enterprises to invest in robotics. Thus, new programming methods are needed to facilitate for craftsmen to transfer their skill to programs for industrial robots. Actions suitable to be carried out by a robot are, for example, arc welding, deflashing, deburring, polishing, cutting, grinding, painting, drilling, gluing, and spraying. The manual tools used for performing these actions are provided with different types of handles, which make it possible for the craftsmen to control the position and orientation of the tools, as precise as possible, and without too large ergonomic problems. However, looking at the tools carried by the robot and used for performing the same actions, there is no aid for any interaction with the craftsman and therefore very difficult programming must be performed using joystick and advanced computer programs.

A gripping tool is sometimes used to hold a workpiece, which is processed by processing tool that is fixedly arranged in the robot work cell. In the manual work place, this corresponds to a situation where a craftsman holds the work object with his hands, while the tool is mounted on, for example, a workbench. This way of working may take place in, for example, grinding deburring and polishing of objects that are not too heavy for manual handling.

In order to obtain an efficient intuitive robot programming in situations as described above, a new programming paradigm is needed, where the craftsman can use tools similar to the manual tools to program the robot by demonstration. This means that it must be possible to move around the tools or work objects and change their position and orientation in a manner that is close to how the manual work is carried out. There have been developments of programming systems where the tools have been mounted on measurement arms or where the tools have been equipped with light emitting diodes or reflectors to be measured by optical measurement systems, but these solutions have not been successful because of high cost of the measurement system and lacking robustness of the measurement system, and the impossibility to use heavy tools or work objects on the measurement arm. Therefore, the only possibility is to mount the tools or work objects on the robot during the programming.

It has been proposed to use a 6-DOF (Degrees Of Freedom) force-torque sensor mounted between the tool and the robot-mounting flange, making it possible for the operator to move around the tool by means of a handle as for example in patent application publication DE19943318. However, a force-torque sensor, which is able to support the force/torque levels from the tool or work object, will not be sensitive enough, and has not the bandwidth needed for accurate and efficient manipulation.

The patent US 4589810 proposes a system for programming motions of an industrial robot, the system including a handle-grip sensor unit including a known sensor for measuring forces and torques. The sensor is integrated in a handle, which is attached to the tool carried by the robot. The handle is used by the operator to guide the tool along a desired robot path during programming of the robot. The sensor is arranged to measure forces and torques exerted by a human hand on the handle. The output from the sensor is transferred to a data processing unit, which converts the output signals from the sensor into data corresponding to forces and torques applied by the operator to the handler. The data processing unit includes an algorithm which converts the output signals from the sensor into drive commands for the joint drives of the robot, and adjusts the system of coordinates of the hand-grip sensor unit to the system of coordinates of movements of an actuator on an end-link of the robot. This patent further proposes a robot sensor arrangement using two force/torque sensors.

This patent proposes the use of a prior art force-torque sensor, for example, corresponding to the sensor described in the patent number DE 2727704, corresponding to patent US 4178799. The force-torque sensor disclosed is of a type that is conventionally used in industry today. The sensor includes a three-dimensional sensing steel structure with a first set of holes in the periphery for mounting the sensor, for example on a robot flange, and a second set of holes in the centre for mounting, example a tool, on the sensor. The sensor includes an outer ring-shaped plate and an inner essentially circular plate, and beams extending between the outer and inner plate. On each beam there are mounted at least two strain gauges. Consequently, the sensor size is large and the sensitivity is small.

Problems with using this type of force-torque sensor are that they are expensive to produce and too large for many applications. They are expensive since the steel structure is complicated to be machined. Since the structure is very stiff, very small movements are obtained, and the accuracy requirements when machining the holes for overload protection are very high. The at least six strain gauges on the beams must be glued with a high precision and a great deal of work is needed to handle all the wiring from the sensors. The smaller the sensor is, the more difficult is the gluing of the sensors. At the small sensor size needed for mounting in a tool control member, there is no place for the measurement electronics, all the wirings, and the electrical contacts needed. Instead, the measurement electronics must be disposed in a separate unit outside the sensor. The manufacturing methods used, such as high precision machining and high precision assembly, are not possible to make cheap, not even at large production volumes.

The above-mentioned US patent discloses a handle attached to the tool on the robot. However, such a handle is difficult to use since it may collide with other objects in the workspace and can be difficult to reach when programming more complicated trajectories.

The patent JP 5303422 teaches the use of two force/torque sensors for manual control of a robot during lead-through programming. A first sensor is connected to a handle in order to input moving commands to the robot and a second sensor is used for detecting power applied to the object to be worked when an operator makes the processing work on the object.

The patent DE 3211992 also describes the use of two force/torque sensors, but in this case these sensors are used for control of a painting robot with both hands of the operator, one hand for the manipulation of the position of the robot and one for the orientation of the painting gun. Thus, this programming is made without any contact with the work-object.

A paper with the title "Silicon Piezoresistive 6-DOF Micro Force-Moment Sensing Chip and Application to Fluid Dynamics" written by Dzung Viet Dao, Toshiyuki Toriyama, John Wells, and Susumu Sugiyama, Center for Promotion of COE Program, Ritsumeikan University, Japan, 2001, presents the development of a new micro 6-DOF force-torque sensing chip utilizing piezoresistive effect in silicon. This sensor can measure three components of force and three components of torque independently. The sensing structure is a silicon crossbeam with 20 conventional piezoresistors diffused on its upper surface. The sensing chip has been fabricated based on silicon semiconductor processes. Although, the immediate application of the proposed sensing chip is to measure forces and torques from particles in a turbulent water flow, it is also proposed that the developed sensing chip could in the future be used in robotics. A problem, which occurs when the proposed sensor is to be used in the above mentioned lead-through programming application is that the silicon is very stiff and fragile and thus can be easily broken into pieces for the force ranges needed in this application.

### OBJECTS AND SUMMARY OF THE INVENTION

The object of the present invention is to provide an improved system for controlling the position and orientation of an object in dependence on forces and torques from a user, which alleviates the drawbacks of the prior art systems mentioned above.

This object is achieved with a system as defined in claim 1.

Such a system comprises a measuring assembly including a first and a second part, wherein the first part is adapted to receive forces and torques from a user, and a sensor adapted to measure forces and torques caused by changes in position and orientation of the first part in relation to the second part, and a data processing unit arranged to receive measuring data from the sensor and based thereon controlling the position and orientation of the object. According to the invention, the measuring assembly comprises a semiconductor chip with integrated sensor elements.

The force-torque sensor is made of a semiconductor material, such as silicon, and is preferably produced by MEMS (Micro Electro Mechanical System) technology. Such a sensor is extremely cheap to produce at high manufacturing volumes. The simple mechanical structures used can easily be automatically manufactured and assembled, even when the sensor is of miniature size. As it is possible to integrate the sensor elements in the sensor, no gluing of strain gauge sensors and no wiring from these sensors are needed. It is possible to integrate all the wiring from the sensors on the chip. Accordingly, no extra room is needed for housing wires and electrical contacts.

Further, according to the invention, the measuring assembly comprises a spring arrangement mounted between the first and second part and mechanically connected to the sensor, for converting forces and torques from the user to changes in position and orientation of the first part in a relation to the second part, and the sensor is adapted to measure forces and torques from the spring arrangement caused by the changes in positional orientation of the first part. The sensor is mechanically coupled to the spring arrangement. The spring arrangement is connected to an overload protection arrangement that prevents overload on the sensor. The spring arrangement transforms the forces and torques from the user to the force and torque levels suitable for the semiconductor sensor. The spring assembly makes the first part compliant relative to the second part, limits the forces on the sensor, and thereby reduces the risk of breaking the fragile sensor.

According to an embodiment of the invention, the semiconductor sensor includes a structure with an outer plate and an inner plate, which are mechanically connected by at least three beams, each provided with at least one piezoresistive sensor element. The spring arrangement is mechanically coupled to the outer or the inner plate of the sensor. The first part of the measuring assembly is mechanically connected to one of the first and second plate of the sensor, for example via the spring arrangement, and the second part of the measuring assembly is connected to the other plate. An advantage with this sensor is that it is enough with one sensor in order to measure 6DOF (six Degreases Of Freedom). If a sensor measuring 6DOF is required, at least six piezoresistive sensor elements are needed. This is, for example, the case if the sensor is provided with three beams equipped with at least two sensor elements each, or the sensor is provided with at least six beams equipped with at least one sensor element each.

According to one embodiment of the invention, the spring arrangement is two-dimensional and comprises: an outer part resiliently connected to an inner part resiliently connected to a sensor attachment mechanically connected to the outer or inner plate of the sensor, and an elongated element having one end mechanically connected to the outer part, and the other end mechanically connected to the other plate of the sensor. In this way, the sensor can be one-sided mounted on the spring arrangement, which simplifies the assembly of the sensor. Preferably, the outer and inner parts of the spring arrangement are ring-shaped, and the outer part is connected to the first part of the measuring assembly and the inner part is connected to the second part of the measuring assembly or vice versa. According to an embodiment of the invention, the sensor comprises at least six beams provided with at least two piezoresistive sensor elements each. Preferably, the beams are arranged in pairs extending in orthogonal directions between the outer and inner plates. In order to obtain high piezoresistivity, the piezoresistive sensors are mounted in either of two orthogonal crystal directions. The beams are therefore given a layout in these crystal directions.

According to an embodiment of the invention, the spring arrangement comprises at least one three-dimensional spring, such as a coil or a spiral spring, disposed between the first or the second part of the measuring assembly and the sensor. A three-dimensional spring is more compact than a two-dimensional spring. This embodiment reduces the size of the measuring assembly, and is especially suitable in cases where force-torque sensors with small dimensions and/or for small forces and torques are needed.

According to an embodiment of the invention, the spring arrangement comprises a first spring entity mounted between the first and second parts of the measuring assembly and mechanically connected to the sensor, and a second spring entity arranged between the first and second parts of the measuring assembly to take up some of the forces and torques from the user. The second spring entity functions as a shunting spring. The forces and torques are distributed between the first and second spring entities to enable a higher force measurement range.

According to an embodiment of the invention, the spring arrangement includes at least three springs positioned at different locations between the first and second parts. The forces and torques are distributed over a plurality of springs positioned at a distance from each other, thereby enabling an isotropic sensitivity, which means that almost equal sensitivity is achieved in all directions of the sensor.

According to an embodiment of the invention, the sensor is mounted on a substrate with essentially the same temperature coefficient as the sensor material. This embodiment achieves compensation of temperature effects caused by the use of material with different temperature coefficients.

According to another embodiment, an element with lower temperature coefficient than the material of the measuring assembly, is arranged to cancel the temperature coefficient differences between the sensor and its surroundings.

According to an embodiment of the invention, the substrate is attached to the measuring assembly via a metal part with a smaller diameter than the substrate. Preferably, the metal part is mounted in the centre of the substrate, whereby the temperature coefficient difference between the substrate and the metal will only give a local stress in the substrate. This local stress will give very small stress disturbance in the sensor and thus reduces the temperature dependence.

According to an embodiment of the invention, an element with the essentially the same temperature coefficient, as compared with the sensor material, and a thickness equal to the thicknesses of the sensor plus the thicknesses of the substrate is arranged to cancel the temperature coefficient difference between the sensor and the rest of the measuring assembly.

According to an embodiment of the invention, the measuring assembly is adapted to be mounted on an object, such as a real tool, a dummy tool, or a work object, carried by an industrial robot having a plurality of joints, and the data processing unit is adapted to control the positions of the joints of the robot carrying the object. The measuring assembly, according to the present invention, is particularly suitable for measuring forces and torques of an operator guiding an object carried by the robot during programming of the robot.

According to an embodiment of the invention, the object is rotationally symmetrical, and the system comprises a handle mechanically connected to the first part of the measuring assembly and rotatably arranged around or in parallel with the symmetric line of the object. Preferably; the handler is similar to the handler of the corresponding manual tool used by a craftsman for carrying out the same task that is to be programmed. The idea is to integrate the measuring assembly in the object in such a way that a tool will follow the intentions of the robot programmer in the same way when mounted on a robot during robot programming as during manual work. The handle is arranged rotatable relative to the symmetric line of the object.

During programming, the handle is free to rotate about the symmetric line of the object. In this way, the handle can always be held in a convenient orientation, independently of how the robot moves and reorientates its wrist, and thus the handle can always be directed in the most favorable direction. One could say that a seventh axis has been added to the robot kinematics to give the robot programmer a degree of freedom free to use for the handle. Preferably, the handle is attached to the object during programming and the handle is detached when the programming is ready. If the object is a tool performing a process, the movements of which are symmetric about the centre line of the tool, such as drilling, deburring, grinding and polishing, the symmetric line of the tool is the axis of rotation of the process.

According to an embodiment of the invention, the system comprises a bearing having its rotational axis coinciding with or in parallel with the symmetric line of the object and arranged between the handle and the first part of the measuring assembly. Preferably, the system comprises a lead-through interface adapted to be mechanically connected to the tool and comprising the bearing and the handle, which is mounted on the interface. Thus, the sensor is mounted on the robot side of the bearing and thereby the directions of the movements with force/torque manipulation of the robot will always be the expected independently of the direction of the handle.

According to an embodiment of the invention, the system comprises a locking mechanism, which upon activation locks the handle in a fixed rotation angle in relation to the symmetric line of the object. This embodiment enables locking of the handle when a manipulation of the tool is needed around the symmetric line.

According to an embodiment of the invention, the measuring assembly is disposed in the handle. Consequently, the measuring assembly is removed from the object when the handle is detached and removed from the object. This is advantageous, for example, if the handle will be an obstacle when the robot runs in production.

According to an embodiment of the invention, the system further comprises a second measuring assembly including: a first and a second part, wherein the first part is adapted to receive forces and torques, a second spring arrangement mounted between the first and second parts of the second measuring assembly, for converting the forces and torques to changes in position and orientation of the first part of the second measuring assembly in relation to the second part of the second measuring assembly, and a second sensor mechanically connected to the second spring arrangement, for measuring forces and torques caused by changes in position and orientation of the first part in relation to the second part, the sensor comprising a semiconductor chip with integrated sensor elements, and the data processing unit is arranged to receive measuring data from the second sensor and based thereon control the position and orientation of the object. According to an embodiment of the invention, the second measuring assembly is adapted to measure interaction forces and torques developed between a tool and a work object. This embodiment makes it possible to control the interaction forces between the tool and work object during calibration and programming.

According to an embodiment of the invention, the system comprises a second handle fixedly arranged relative to the object and mechanically connected with the first part of the second measuring assembly, and the data processing unit is arranged to mainly control the position of the object based on measuring data from the first sensor and to mainly control the orientation of the object based on measuring data from the second sensor. The second handle makes the movement of the object more robust. The second handle does not need to be rotatable relative the object.

According to an embodiment of the invention, the system comprises a second handle fixedly arranged relative to the object and mechanically connected with the first part of said second measuring assembly, and said data processing unit is arranged to mainly control the position of the object based on measuring data from said first sensor and to mainly control the orientation of the object based on measuring data from said second sensor.

The system according to the invention is particularly suitable for moving an object carried by an industrial robot during programming of the robot. Further, the invention is particularly suitable for moving an object carried by an industrial robot during calibration of the position and orientation of the object. The object can either be a work object or a tool.

By mechanically connected should be understood that the parts do not have to be in direct mechanical contact with each other; the parts can also be in mechanical contact via one or more other parts.

### BRIEF DESCRIPTION OF THE DRAWINGS

The invention will now be explained more closely by the description of different embodiments of the invention and with reference to the appended figures.
Figures 1a-e show a system for controlling the position and orientation of an object according to an embodiment of the invention.
Figures 2a-b show the system including a handle rotatably arranged around a symmetric line of an object carried by a robot.
Figure 3 shows another embodiment of the object including a rotatably arranged handle.
Figures 4a-b show the arrangement in figure 3 in more details.
Figure 5a shows a cross-sectional view through the rotational arrangement and the handle in figure 3. Figure 5b shows another embodiment of the handle shown in figure 5a.
Figures 6a-b show a robot tool including two handles suitable for grinding. Figure 6b is a cross-sectional view through the rear handle of figure 6a.
Figure 7a shows an embodiment of the robot tool shown in figure 6a. Figure 7b shows a cross-sectional view through the front handle of the tool shown in figures 6a and 7a.
Figures 8a-b show an example of how cables from switches shown in figure 7a are laid out.
Figure 9a shows a manual arc-welding torch according to the prior art. Figure 9b shows an arc-welding torch to be carried by a robot including a measuring assembly according to an embodiment of the invention.
Figure 10 shows a cross-sectional view taken along the center line of the torch shown in figure 9b.
Figure 11a shows a manual grinding tool. Figure 11b shows an example of a handle suitable for a grinding tool to be used by a robot.
Figure 12 shows a cross-sectional view along a line A-A of the tool shown in figure 11b.
Figures 13a-13c show an example of a measuring assembly for measuring forces and torques.
Figure 14 shows an alternative design of the upper transducer plate of figure 13a.
Figures 15-17 show another example of a measuring assembly for measuring forces and torques.
Figures 17a-c show an alternative with respect to the mounting of the handles for the tool shown in figure 11 b.
Figures 18a-b show different configurations for mounting two handles on a tool.
Figure 19 shows an alternative for the placement of the bearing when using a tool with a symmetric process having a center axis coinciding with the axis of rotation of the bearing.
Figures 20a-d show a plurality of different dummy tools including a second measuring assembly to be used during programming of a robot.
Figures 21a-b show a measuring assembly including a two-dimensional spring arrangement.
Figures 22a-b and 23 show examples of measuring assemblies based on capacitance measurement technology.
Figure 25 shows an alternative for the electrode configuration.
Figures 25a-b show an example of a spring arrangement that makes it possible to mount the sensor from one side.
Figures 26a-b show another example of a spring arrangement that makes it possible to mount the sensor on only one side.
Figure 27 shows an example of a sensor for measuring forces and torques.
Figure 28 shows an example of a measuring assembly for measuring forces and torques from a user including a three-dimensional spring arrangement.
Figures 29a-b show further examples of measuring assemblies for measuring forces and torques including three-dimensional spring arrangements.
Figure 30 shows the measuring assembly in figure 29a seen from above when the spring is removed.
Figures 31a-b show two examples of measuring assemblies including three springs. Figure 31c shows an example of a measuring assembly including three springs and at least two shunting springs.
Figure 32 shows an example of how the springs can be arranged with an angle relative to the sensor.
Figure 33 shows an example of a measuring assembly including a three-dimensional spring arrangement with the sensor mounted on one side.
Figure 34 shows an example of a layout of the sensor chip and the mounting connections to the chip.
Figure 35a-b show examples of measuring assemblies including temperature compensation.
Figures 36a-b show an example of a situation when the operator needs to mount the handle on a work object.
Figure 37 shows a handle arrangement that can be used to clamp the handle at different places on the work object hold by the robot.
Figure 38 exemplifies how a handle is clamped around a cylindrical part of the work object.
Figure 39 shows an alternative design of the handle and its clamping mechanism.
Figure 40 shows how the handle in figure 3 is clamped on the work object.
Figure 41 shows the same arrangement as in figure 40 but the reference handler is replaced by a sensor mounted between the gripper and the robot-mounting flange.
Figure 42 shows some examples of the design of handles including bearings used for tools where the handle with the bearings does not need to be mounted outside a tool center.
Figure 43 shows a robot cell in which lead-through program is used for work object calibration and process programming.
Figure 44 outlines the case when the tool shown in figure 20a is used to measure points on the surface of an object.
Figures 45a-b show different ways of moving the tool along a surface.
Figure 46 shows the measurement of points in the interface between two objects.
Figure 47 shows a case when the tool shown in figure 20a is manipulated for programming of a motion using an oxy-fuel burner.
Figure 48 exemplifies different interaction situations between the tool and the surface of an object.
Figure 49 exemplifies the programming of deburring or deflashin of an edge using the tool design according to figure 20a.
Figure 50 shows a case of stub grinding.
Figure 51 gives an example of another case, which corresponds to grinding or polishing of a surface.
Figure 52 shows a case of stub grinding when a real tool is used and the programming is made during grinding.
Figure 53 outlines a main structure of the control system for the implementation of the lead-through programming.
Figure 54 exemplifies one possible design of a lead-through controller.
Figure 55 shows that the output from the handle force/torque sensor can be used to determine the direction of the movement of the tool.
Figure 56 shows that force control surface tracking can be started when a contact is obtained between the tool and the work object.
Figure 57 shows a direct locking module.

### DETAILED DESCRIPTION OF PREFERRED EMBODIMENTS OF THE INVENTION

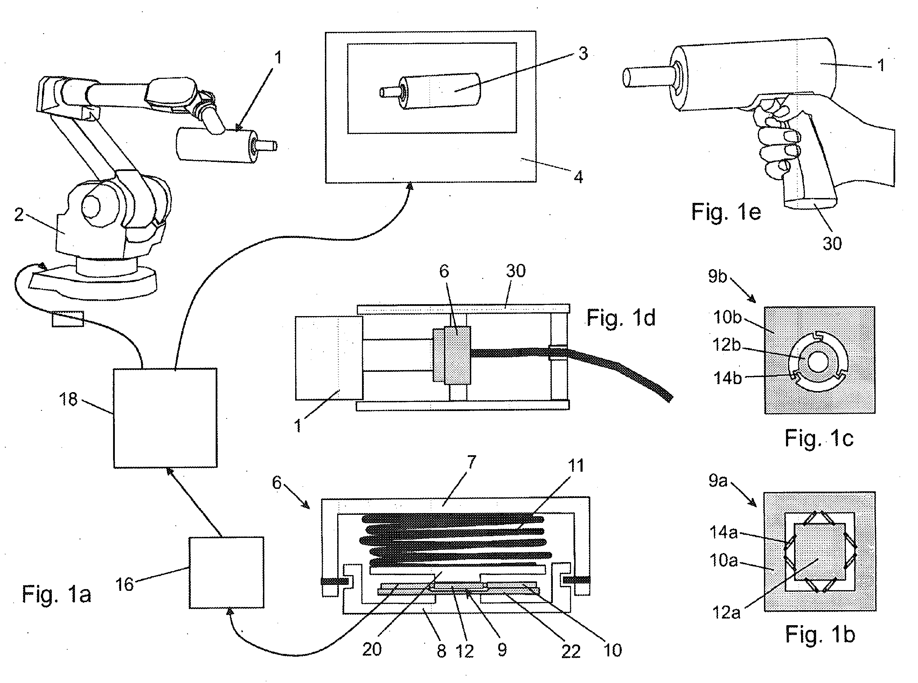

Figure 1a shows a system used by a human operator to control the position and orientation of an object, which can be a real object 1 manipulated by a robot 2, or a virtual object 3 displayed on a computer screen 4. The system comprises a measuring assembly 6 for measuring forces and torques, which includes a first part 7, in this example a sensor housing, adapted to receive forces and torques from a human operator, and a second part 8, in this example a sensor flange, wherein the first and second parts are arranged movable relative to each other. The measuring assembly 6 further comprises a sensor unit adapted to measure forces and torques caused by changes in position and orientation of the first part 7 in relation to the second part 8. The sensor comprises a semiconductor sensor chip 9 and measuring electronics 16.

Figure 1b shows an example of a semiconductor sensor chip 9a comprising an outer rectangular plate 10a and an inner rectangular plate 12a, which are mechanically connected by eight beams 14a, each equipped with at least two piezoresistive sensor elements to measure the strains in the beams, strains which are functions of the forces and torques between the inner and outer plates of the sensor. Figure 1c shows another example of a sensor chip 9b comprising an outer plate 10b and an inner circular plate 12b, which are mechanically connected by three beams 14d, each provided with at least two piezoresistive sensor elements. The sensor elements are integrated in the beams 14a-b and cannot be seen in the figures. The sensor elements measure forces and torques between the outer plate 10a-b and the inner plate 12a-b of the sensor 9a-b.

The sensor elements are electrically connected to the measurement electronics 16, which in turn is connected to a computer 18 including a data processing unit, which controls the robot 2 or the graphical display 4 based on received measuring data from the sensor 9 in such a way that the position and orientation of the object 1, 3 is changed according to the intention of the human operator.

The measuring assembly 6 further comprises a spring arrangement, in this embodiment a coil spring 11 mounted between the first and second parts 7,8 and mechanically connected to the sensor 9, for converting forces and torques from the operator to changes in position and orientation of the first part in relation to the second part. The sensor 9 is adapted to measure forces and torques from the spring 11 caused by the changes in position and orientation of the first part. The outer plate 10 of the sensor is mechanically connected to the second part 8 via the sensor holder 22 and the inner plate 12 of the sensor is mechanically connected to the first part 7 via the spring 11.

The measuring assembly further comprises a sensor mounting part 20 arranged between the spring 11 and the sensor 9 and a sensor holder 22 arranged between the sensor 9 and the second part 8. However, it is also possible that the sensor flange 8 instead receives the forces and torques from the operator. Since the first and second parts 7, 8 are movable relative to each other, it does not matter which one of the parts receives the forces and torques, the measurement will still be the same. The measuring assembly 6 and the sensor 9 can be constructed in many different ways. In the following a plurality of different embodiments of the sensor and the measuring assembly will be described.

The first part of the measuring assembly does not need to be in direct contact with the hand of the operator. Instead, the forces and torques from the user can be applied on a handle 30, as shown in figure 1e, which handle is mechanically connected to the first part 7 of the measuring assembly so that the forces and torques from the user are transmitted to the first part. Figure 1d shows a cross-sectional view through the handle 30. In this example the measuring assembly 6 is positioned in the handle.

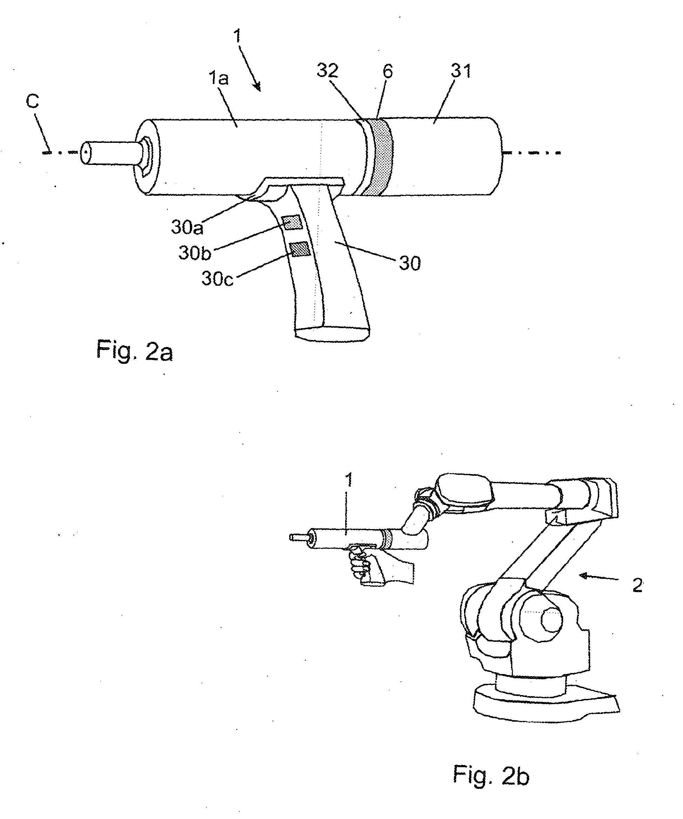

Figures 2-5 show force-torque sensor integration solutions for tools of gun-type. Figures 2a-b show a tool 1, which is geometrically symmetric around a centre line C of the tool. Examples of such processes are painting, gluing, drilling, deburring, grinding, milling, and polishing. For these symmetric processes, a rotation around a centre line is allowed and during programming the handle 30 can point in any direction around the centre line C. The handle 30 is attached to a main body 1a of the tool 1 by means of a connection 30a during programming. The connection 30a is arranged detachable from the tool 1. The handle 30 comprises a start/stop switch 30b and a safety switch 30c. Of course, more process switches can be implemented on the handle. The safety switch 30c is, for example, a three-position switch. The tool 1 is provided with a robot connection part 31 for connection to the robot. Between the robot connection part 31 and the main body 1a of the tool, a measuring assembly 6 for measuring force-torques, and one bearing 32 which can be locked during production, are mounted.

During programming the bearing 32, with its rotation axis coinciding with the centre line C of the tool, is free to rotate and thus the tool can rotate around the centre line C. In this way, the handle 30 can always be held in a convenient orientation, independent on how the robot moves, and can reorients its wrist and the handle can always be directed in the most favorable direction. The measuring assembly 6 is mounted on the robot side of the bearing, and in this way the directions of the movements with the force/torque manipulation of the robot will always be the expected, independent of the direction of the handle 30. When the programming is made, the bearing is locked, for example by a pin or by a mechanical brake, and the handle is detached. Figure 2b shows the tool 1 attached to the robot 2.

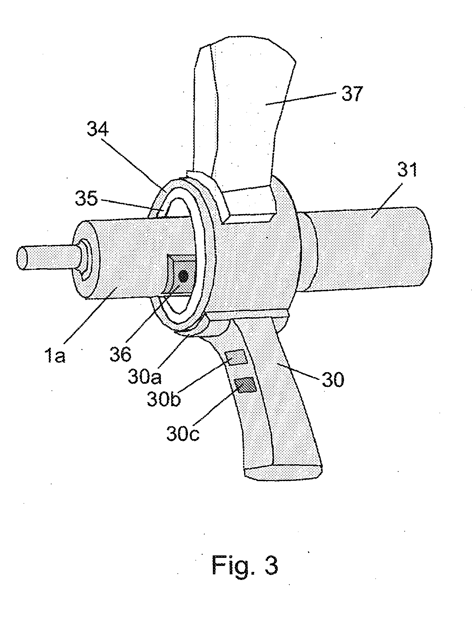

In the embodiment shown in figure 2a-b, the measuring assembly 6 is positioned between the robot and the tool. Figure 3 shows another embodiment in which the measuring assembly is positioned between the handle and the tool. This is a more robust solution and makes the sensor sensitive enough for forces and torques from the operator during programming and stiff enough during production. In the embodiment shown in figure 3 the handle 30 is mounted on a cylinder 34, which is mounted to the tool main body 1a via a bearing 35 and a sensor assembly measuring forces and torques, not seen behind the cylinder 34, and an attachment 36 for attaching the bearing to the tool body. The axis of the bearing 35 should coincide, or at least be parallel with, the centre line of the tool, and the handle 30 can be rotated around the tool centre line in the same way as in figure 2.

In order to make the movement of the gun more robust, a second handle 37 can be mounted on the cylinder 37 at a distance from the first handle 30. The second handle 37 can also be detachably arranged on the cylinder 34. Process switches can be placed on both handles. When the programming is finished, the handles can be detached. With this design, the bearing does not need to be locked during production. The cylinder 34, the bearing 35, the measuring assembly, and the attachment 37 constitute a lead-through, interface to the tool.

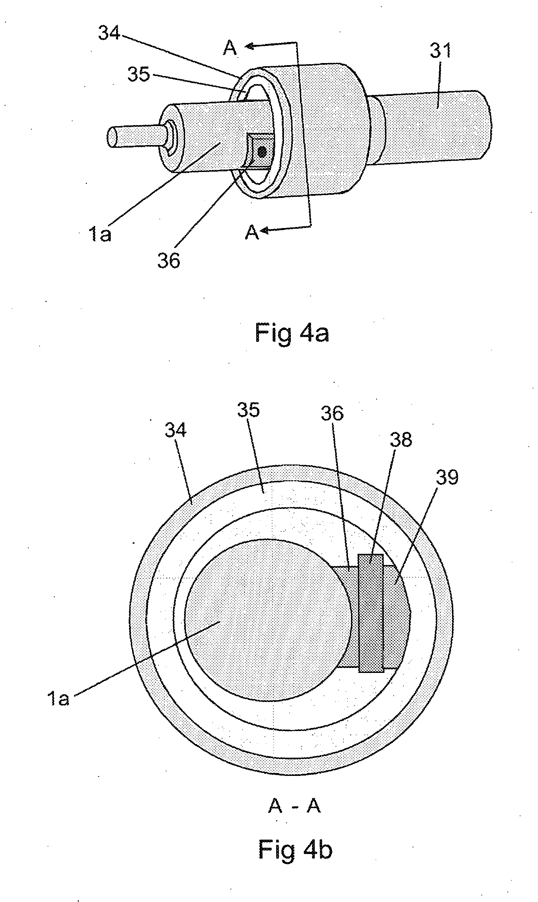

Figure 4a shows the tool body 1a and the lead-through interface shown in figure 3 with the handles detached. Figure 4b shows a cross-sectional view along the line A-A of the tool body and lead-through interface in figure 4a. The figures show the tool body 1a, the bearing 35, and the cylinder 34 on which the handles are attached during programming. The cylinder 34 with the handles is rotatable in relation to the main body 1a of the tool. A measuring assembly 38 for measuring forces and torques in five or six DOF is mounted between the bearing 35 and the tool body 1 a, by means of the attachment 36 and an adapter 39. The adapter 39 has an arrangement for the attachment to the cylinder 34, for example by simple screw joints.

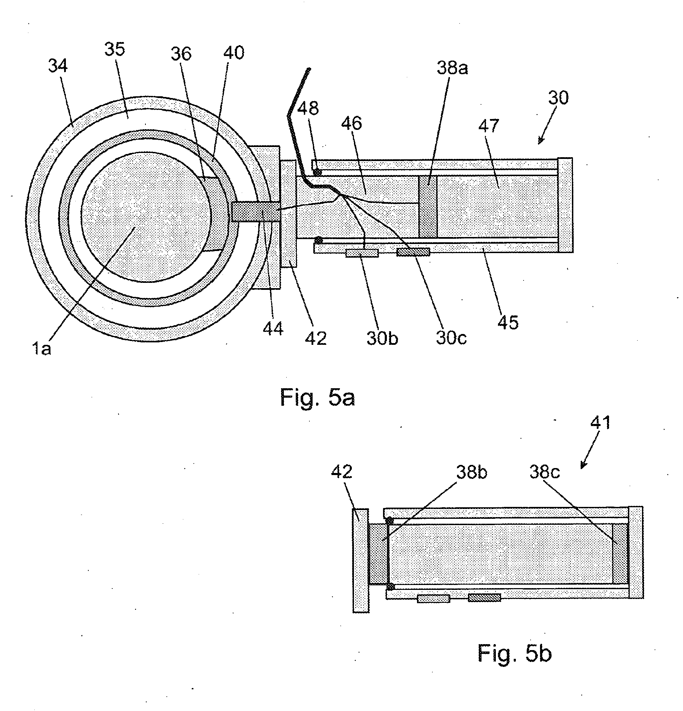

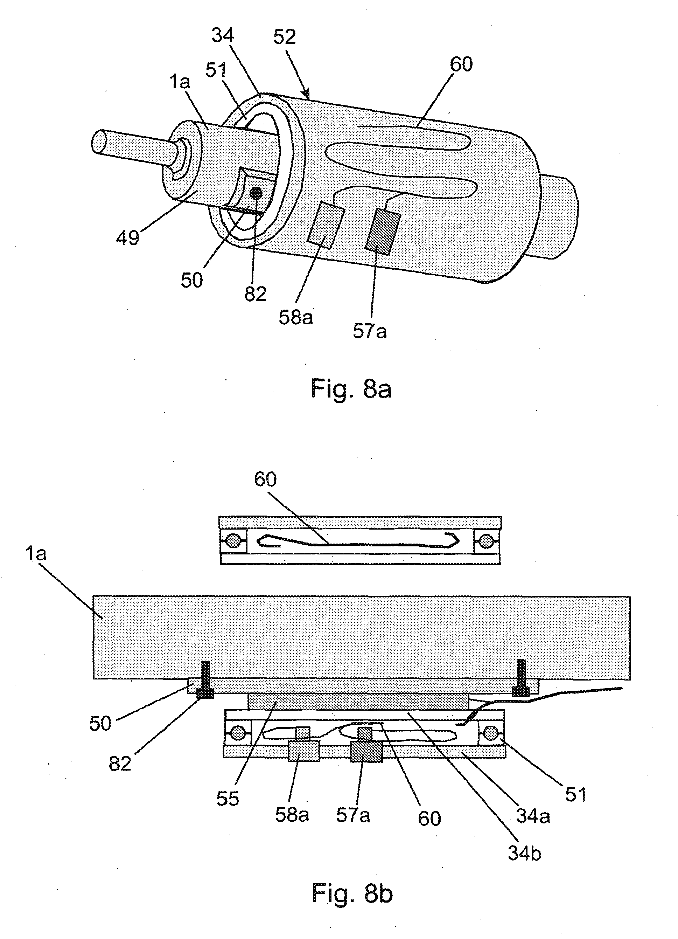

In the figures 3 and 4a-b it is assumed that the cables to the process switches 30b-c are laid out in a zigzag pattern between the cylinder 34 and the tool main body 1a, as will be described with reference to figures 8a-b, and that there is a connector in the attachment 30a of the handle. If instead the handle is connected directly to the computer 18, which for example is a robot controller, as a teach pendant, a design as shown in figure 5a can be used.

Figure 5a shows an alternative embodiment in which the measuring assembly is disposed in the handle. In this embodiment the measuring assembly 38a has been moved out to the handle 30 and to be able to calculate the sensor coordinate system in relation to the tool coordinate system, an angle measuring arrangement 44, for example a capacity, optical, magnetic, or potentiometer based encoder, is introduced to measure the angle of the handle 30 in relation to the tool body 1 a when the handle is turned around the centre line of the tool. The handle 30 comprises two inner tubes 46 and 47, between which the measuring assembly 38a is mounted. The outer part of the handle 30 is another tube 45 mounted on the end of the inner tube 47. The outer tube 45 is sealed by an elastic ring 48 and contains the safety switch 30c and the process switch 30b. The lead-through interface further includes an inner cylinder 40 in mechanical contact with the bearing 40.

Figure 5b shows an alternative handle design 41 including two measuring assemblies 38b and 38c for measuring forces and torques acting on the handle 30b with the benefit of improved measurements of the operator hand forces and torques. The measuring assemblies 38b, 38c are arranged in opposite ends of the handle 41. It is also possible to combine a handle, with a built-in measuring assembly as shown in figure 5b, with an arrangement as shown in figure 4, whereby the measuring assembly 38 in figure 4b can be used to manipulate the position of the tool, while the handle 41 in figure 5b is used to manipulate the tilt angle of the tool.

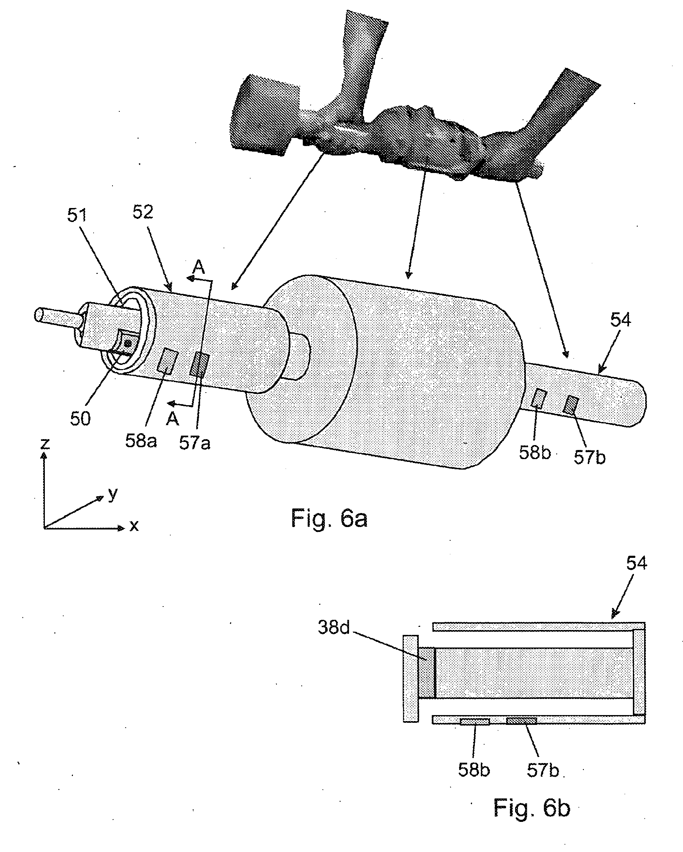

Figures 6a-b, 7a-b, and figures 8a-b show lead-through interfaces to a grinding machine with co-liner handles. With this tool configuration, the hand closest to the tooling mainly controls the position of the tool, while the other hand adjusts the tilt angles.

Figure 6a shows a tool provided with a first handle 52 rotatably arranged around the symmetric line of the tool and a second handle 54 fixedly arranged relative to the tool. Figure 6b shows an axial cut along the symmetric line through the second handle 54. The first handle 52 is built up in the same way as the lead-through interface disclosed in figures 4a-b. The first handle 52 is mounted close to the tooling. The handle 54 includes only one measuring assembly 38d, and the handle is mounted in the opposite end of the tool, which is closest to the robot. The first handle 52 comprises an attachment 50 for attaching the interface to the tool body, a bearing 51, a process switch 58a, and a safety switch 57a. The second handle 54, which should be possible to dismantle after programming, also comprises a process switch 58b, and a safety switch 57b. Looking at the coordinate system, the handle 52 is used to position the tool in the x-, y-, and z-directions, and the second handle 54 is used to tilt the tool around the y- and z-axes. Since the tool is symmetric around the x-axis, no manipulation or rotation is made around the x-axis. The first handle 52 also comprises a measuring assembly, which is not shown.

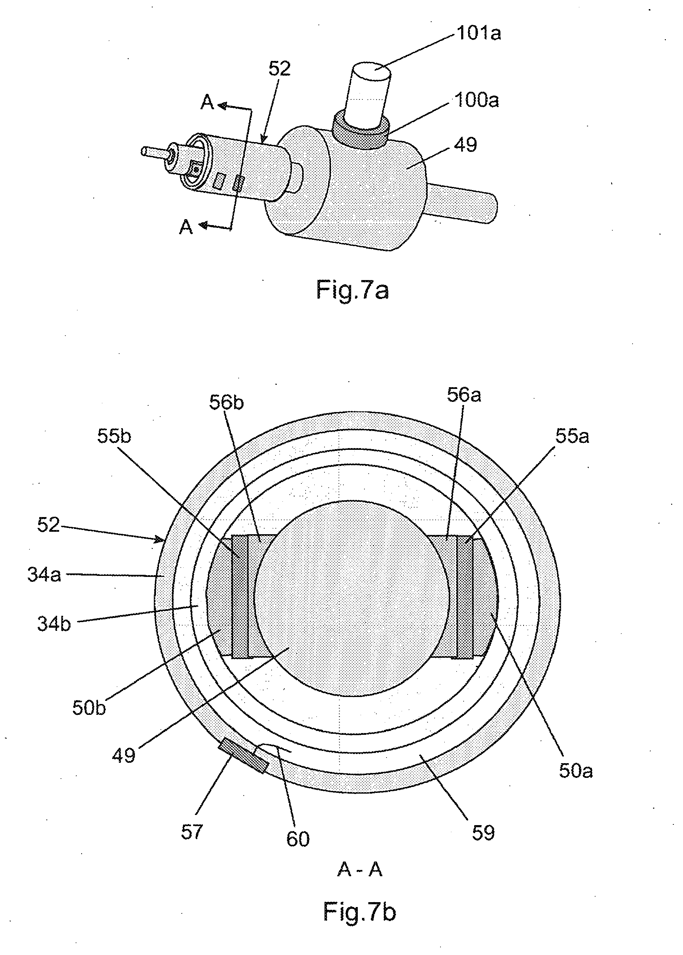

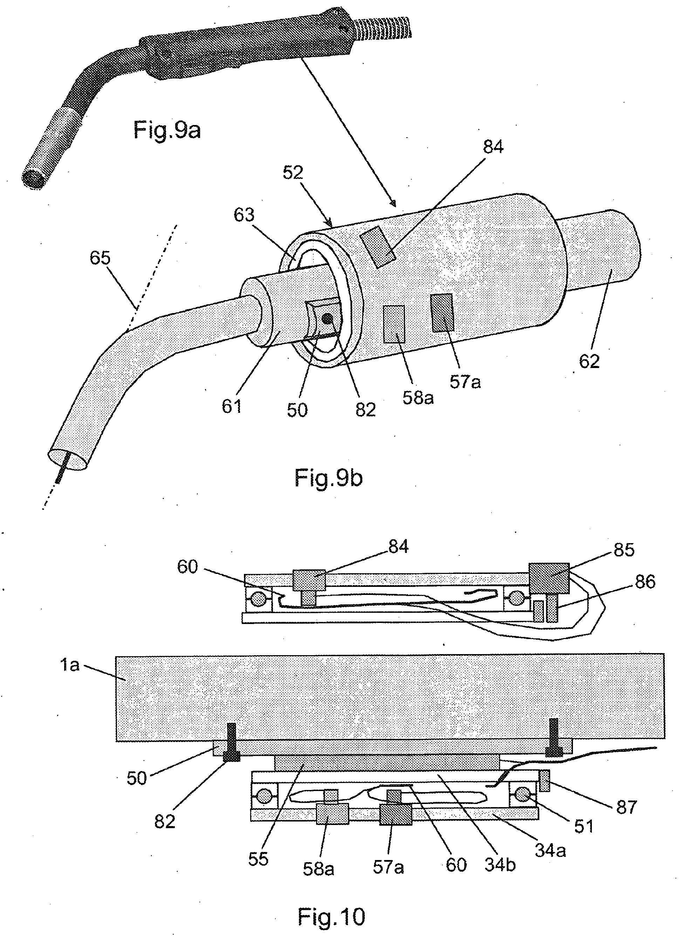

Figure 7b shows a radial cut of the handle 52 in figure 6a and figure 7a. The bearing between the handle and the tool outlined in figures 3-6 could be made of two bearings, one in each end of the lead-through interface. Thus, between the bearings there will be a space, see also figures 8 and 10, in which a cable can be laid out in a zigzag pattern to the process and accommodate safety switches in order to allow rotation of the handle without any problems with the cables. As seen in figure 7b the outer cylinder is divided into an outer cylinder 34a and an inner cylinder 34b arranged at a distance from each other, thereby forming a space 59 between them, in which a cable 60 can be laid out to the process and safety switches. The cylinders 34a-b are mechanically connected by the bearings (not shown in the figure) at the end of the cylinders, and between the bearings in axial direction cables 60 from the switches can be laid out. The inner cylinder 34b is mounted on the tool body 1a via two measuring assemblies 55a, 55b. The measuring assembly 55a is mounted between the adaption units 50a and 56a, and the second measuring assembly 55b is mounted between adaption units 50b and 56b.

Figure 7a also shows a measuring assembly 100a mounted between the tool body1a and a robot attachment 101a. This is a sensor, which can be used for force control grinding in production, but it will also be very helpful for the lead-through process during programming, since it can control the force between the tool and the object also during lead-through. With a lead-through interface, the operator orders for example a movement towards an object, and he continues the movement until the surface is reached, and the process control force sensor stops the movement at a certain force. In this way the operator knows that he will always have a contact between the tool and the work object and there is no risk that the tool force will become too large. Moreover, he can even make grinding during programming, whereby the robot determines the grinding force, and the operator the grinding movements. Thus, it will be possible to carry out not only programming of trajectories by demonstration, but also programming process parameters by demonstration.

Figures 8a-b show how the cables 60 from the process switches 58a, 57a are laid out between the outer and inner cylinders 35a-b. Figure 8a is the same as the left part of figure 6a and figure 8b shows an axial cut through the tool interface in figure 8a. The interface includes a tool attachment 50 for attachment of the interface to the main body 1a of the tool, screws 82 for the attachment of the tool attachment on the main body 1a of the tool, a measuring assembly 55 including a 6DOF force-torque sensor, a bearing 51 between cylinders 34a-b, a process switch 58a and the safety switch 57a. As can be seen, the cable 60 from the switches is laid out in a zigzag pattern between the cylinders 34a-b and is then taken out through the cylinder 34b and goes together with the cabling from the force-torque sensor via the tool to the robot and the robot controller.

Figures 9a-b show an arc-welding torch with a process center line 65 for a process differing about 45 degrees from the center line of the handle. In this case, the lead-through interface must be manipulated with 6DOF, and the bearing 63 must be locked. However, in order to be able to change the gripping angle without releasing the safety switch, a new switch 84 is introduced to lock up the bearing 63 when it is necessary to change the direction of the gripping.

Figure 10 shows how this can be implemented. The lead-through interface is attached to a part 61 of the main body of the welding torch. The interface includes a breaking disc 87 made as a ring, a breaking clutch 86, and an electromagnetic part 85 for activating the break. Thus, during programming the break is on and when a new grip angle is needed, the switch 84 is pressed and the break makes the cylinder 34b free to rotate in relation to the cylinder 34a and the gripping angle can be changed without moving the fingers away from the switches 58a, 57a and 84. The same concept can also be used in the gun case in figure 3 if a not symmetric process is used, for example for the generation of a rectangular glue seam. When the process is symmetric, the arrangement of figure 9b could be used instead of a handle. In, for example, figure 3, this means that the cylindrical part 34 is used directly as a handle and the switches 30b-c are mounted on the cylindrical part 34 to be accessible by the fingers of the operator independent of the orientation of the tool. The rest of the figure 10 is the same as shown in figure 8b. In order to avoid any motion of the torch during the change of the gripping angle, the switch 84 can also be connected to the robot controller to lock the force-torque manipulation function and run in position controlled to keep the torch steady in place. This functionality could also be used in the case of the gun-type design according to figures 3-5.

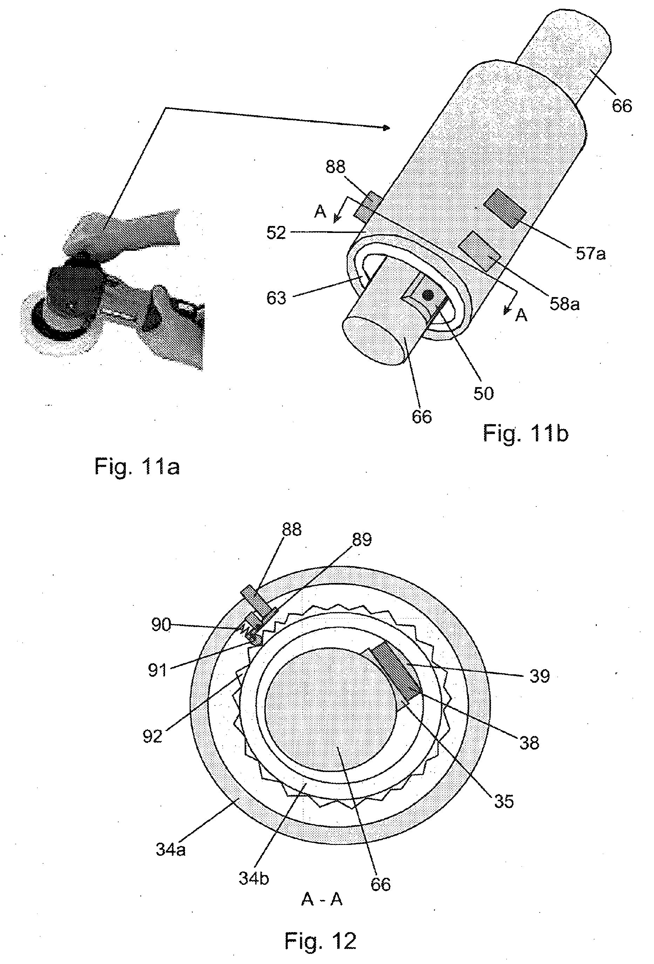

Figures 11a-b show another tool configuration where the handle is at right angles to the centre line of the motion of process performed by the tool. As in the case shown in figure 9b, the lead-through interface must also be able to control 6DOFs and the break arrangement in figure 10 could be used also here. However, another option is to use a mechanical locking mechanism exemplified in figure 12, which is a cross sectional view along the line A-A of figure 11 b. As can be seen from this figure, the inner cylinder 34b is provided with teeth 92, which will lock the outer cylinder 34a to the inner cylinder 34b through a spring ball coupling 90-91. When pressing a knob 88, a level 89 will lift up a ball 91 from a teeth ring 92 and the outer cylinder 34a can be rotated relative the inner cylinder 34b when the gripping angle must be changed. The knob 88 can simultaneously have an electric switch to change the control strategy from force/torque manipulation to position control.

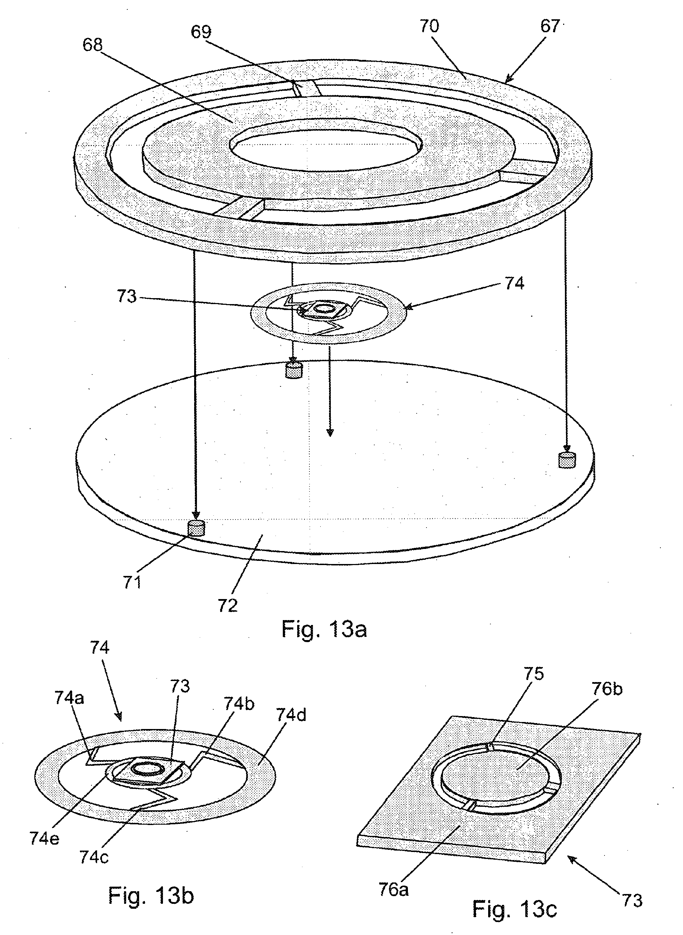

Figures 13a-b show a possible implementation of a 6DOF force-torque measuring assembly adapted to the lead-though interfaces described in this document. Figure 13a shows a measuring assembly including a 6DOF force-torque sensor chip 73. The sensor 73 is mounted in a transducer, as shown in figure 13a. The transducer transforms the forces and torques from the tool handle to the force and torque levels, which the sensor 73 is made for. The transducer comprises a top plate 67, a bottom plate 72, and connectors 71 to mount the top plate on the bottom plate. The top plate 67 includes an outer ring shaped part 70 and an inner ring shaped part 68 connected to each other with resilient parts 69. The forces and torques will take place between the inner ring shaped part 68 and the bottom plate 72, and because of the resilient parts 69 having certain elasticity the inner ring shaped part 68 will move in 6DOF relative the bottom plate 72 when the forces and torques are introduced. These movements are transferred as forces to the sensor 73 through a spring arrangement 74.

The spring arrangement 74 is disclosed in more detail in figure 13b. The spring arrangement 74 comprises an outer ring 74d, an inner ring 74e, and a plurality of springs 74a-c, in this embodiment three springs, arranged between the outer and inner rings 74b-e. The springs 74a-c have spring constants relative the resilient elements 69 to obtain the desired force-torque transformation.

Figure 13c shows the sensor 73 in more details. The sensor 73 includes an outer plate 76a and an inner plate 76b, which are connected to each other with a plurality of beams 75, in this embodiment three beams. This type of sensor is made as a monolithic silicon chip with integrated piezoresistive sensors on the surface of the beams 75. A typical dimension of such a sensor based on SENSOR technology is a thickness of 0,7 mm and a diameter of 5 mm. The outer ring 74d of the spring arrangement is mechanically connected to the inner ring shaped part 68 of the top plate 67, and the inner ring 74e of the spring arrangement is mechanically connected to the outer plate 76a of the sensor 73. The inner plate 76b of the sensor is in mechanical contact with the bottom plate 72 of the transducer.

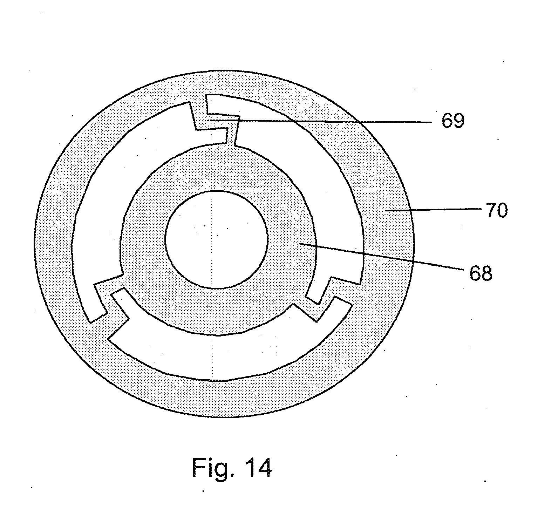

In order to obtain a more homogeneous 6DOF elasticity of the top plate 67, the resilient parts 69 can be made as shown in figure 14.

Using the semiconductor sensor, a very small transducer can be built at very low costs, which makes such a sensor solution ideal for the integration into the lead-through interfaces as previously described. Another possibility is to use a capacitive force-torque sensor.

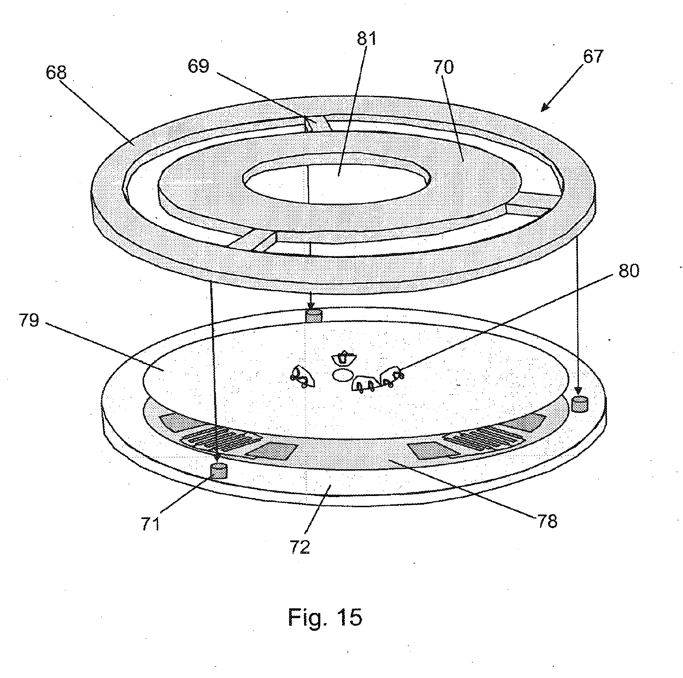

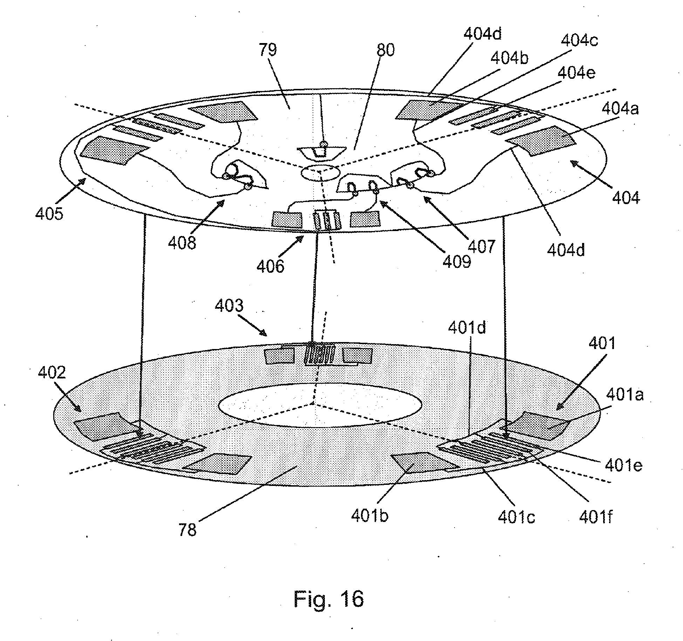

Figures 15 and 16 show an example of a capacitive force-torque sensor, which can be used in lead-through interfaces. Here a 6DOF measurement is made of the motions between the transducer bottom plate 72 and the transducer top plate 67 by means of two plates 78 and 79 with electrodes facing each other according to figures 15 and 16. The plate upper 79 is glued to the ring shaped inner part 70 of the transducer top plate and a plate 78 is glued to the transducer bottom plate 72. The wiring to the electrodes on the plate 79 is available from the hole 81 of the upper transducer plate 67 and measurement electronics can be situated in this hole, bonded to the wiring 80. All the electrodes of the lower plate can be connected to the upper plate by capacitive bridges to make the manufacturing and cabling as easy as possible.

The electronics on the downside of the upper plate 79 and on the upside of the lower plate 78 are shown in figure 16. There are three electrode groups 401, 402 and 403 on the lower plate 78 and corresponding three electrode groups 402, 405 and 406 on the upper plate 79. Each electrode group pair 401-404, 402-405 and 403-406 will measure changes in distance between the plates and tangential movements between the plates, which together makes the measurements of the 6DOFs. The electrode pairs with the large surfaces, for example 401a-404a and 401b-404b, are used to send/receive signals to or from the lower plate 78. The measurement electrodes are placed in such a way that one electrode on the upper plate, for example 404e, has a capacitive coupling to two electrodes, for example 404e to 401e and 401f in the lower plate. Every second of the measurement, electrodes of the lower plate are connected, see for example the lines 401c and 401d, and all the electrodes on the upper plate are connected 404d. The plates can be mounted very close to each other to obtain a very high sensitivity. To obtain a high mounting accuracy, kinematic coupling can be integrated into the plates, for example, with three grooves on both plates and the use of a cylinder in each grow pair during mounting.

The sensor design concepts shown in figures 13-16 are based on the use of plane two-dimensional spring structures and in order to obtain the compliance needed, the spring plates cannot be too miniaturized. Therefore these two-dimensional spring arrangements are best adapted to such lead-through designs as shown in figures 2, 7, 17 and 19.

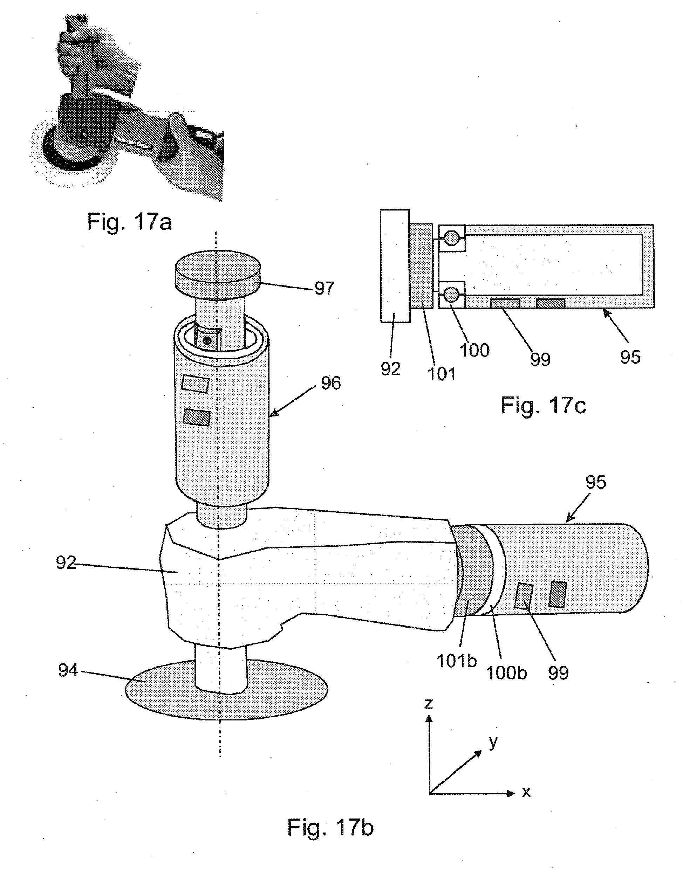

Figures 17a-c show an alternative with respect to the mounting of the handles for tool in figure 11 b. Here the lead-through interface 96 is mounted with a bearing axis coinciding with the process centre line and a second lead-through interface 95 is used for easy manipulation of the tilt angles of the tool, which means rotation around the x-z-axis of the inserted coordinate system. The interface 96 will be used to manipulate the tool position x,y,z and the tool rotation around the x-axis. By having safety switches on both lead-through interfaces 95, 96, increased safety will be obtained. A new switch 99 has been introduced and this is used to zero the force-torque sensor measurements in the lead-through interfaces. This is necessary to avoid that drift of sensor signals lead to unwanted robot motion during programming. This switch can also be used in all the other lead-through interfaces in the previous figures.

The lead-through interface 95 has a bearing 100b mounted on the end wall and between this bearing and the tool main body 92 there is a force-torque measuring assembly 101 b mounted. If a power cable must enter the tool where the interface 95 is located, an interface of the same type as the interface 96 should be used instead, since in this interface design there is a free centre part for cables and houses. A force-torque measuring assembly 97 is mounted between the tool and the robot to be used for controlling the robot in such a way that a force between the tool and the work object is limited during lead-through programming using the lead-through interfaces 95 and 96. This concept to use a force-torque sensor for controlling interaction forces during lead-through programming can be used for all applications when contact is needed between the tool and the work object. The force-torque measuring assembly 97 is used during processing, but can also be used to control the tool for lead-through programming.

In order to always be able to change the gripping direction without releasing the safety switch, the best solution is to have one lead-through interface with integrated bearings and force-torque measuring assemblies in each hand. There are many ways to obtain ergonomically correct mounting of two handles on different tools dependent on the way the tool works, accessibility and the process itself.

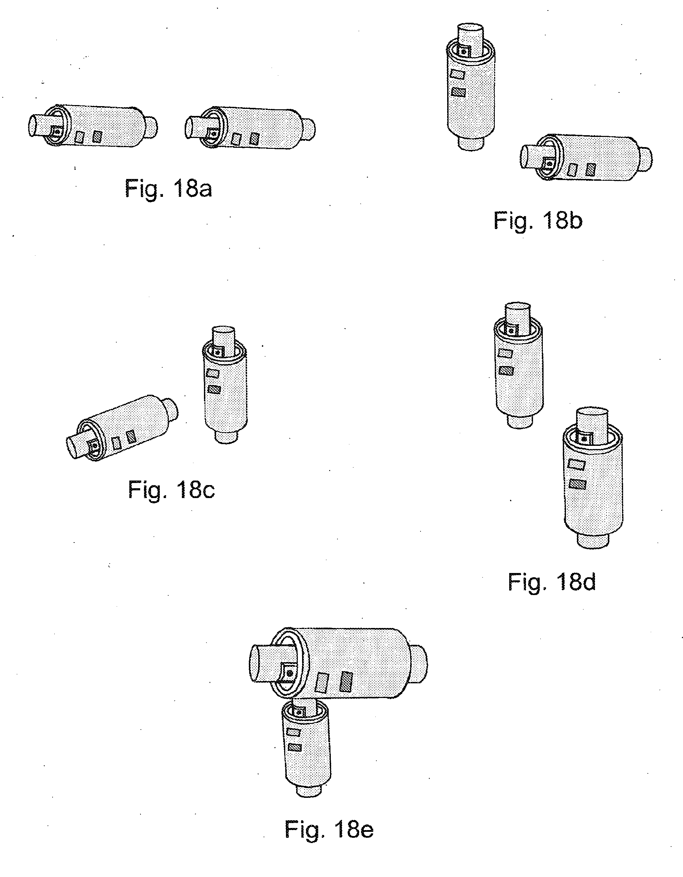

Figures 18a-e show main configurations for mounting two lead-through interface handles on tools. The configurations can be mounted in different directions in relation to the tool and there is no distinction between up and down or orientation of the configurations, only the internal relations between the handles is taken into consideration. In figure 18a the handles are mounted in a line after each other, or along two parallel lines after each other, as shown in figure 6a, but can also be used for plane grinding tools, deburring tools, and polishing tools. In figure 18b the handles are mounted with an angle to each other, as shown in figure 17b, but can also be used for a large number of other tools, such as cleaning guns, band files, measurement tools, drilling tools and welding torches. In figure 18c the handles are also mounted with an angle to each other, but with the left handle pointing more or less at the centre of the right handle for better balance between the handle forces, as in hand sawing machines, hand-milling machines etc. In figure 18d the handles are mounted parallel as in drilling machines with extra support handle and polishing tools. Figure 18e shows the special case when one handle is mounted on another handle, which in principle is the same as in 18b but here the rotation of one hand is coupled to the movement of the other hand.

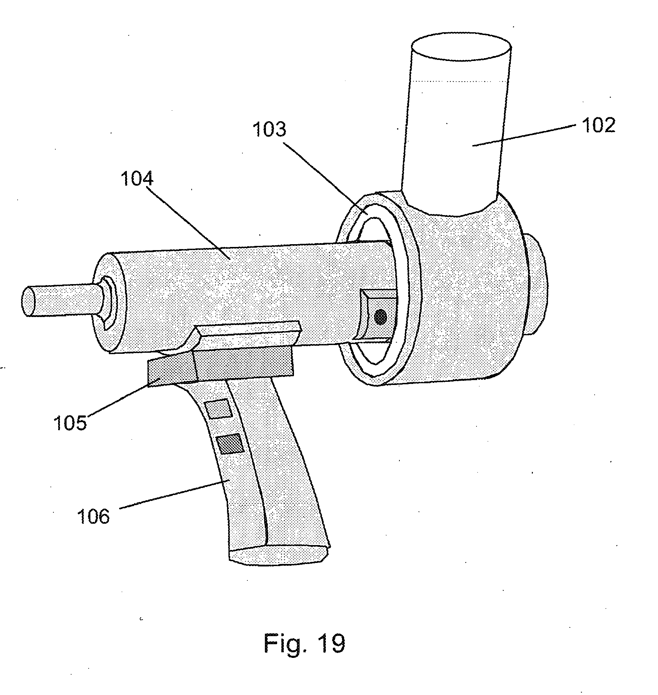

Figure 19 shows an alternative for the placement of the bearing when using a tool with a symmetric process having a centre axis coinciding with the rotation axis of the bearing. In these cases the outer cylinder and the bearing 103 can be mounted on the attachment mechanism 102 to the robot. This means that the handle 106 will rotate the whole tool, which also was the case in figure 2. However, in figure 2 the force-torque measuring assembly is mounted on the robot attachment mechanism, while in figure 19 a force-torque measuring assembly 105 is mounted between the handle 106 and the tool main body 104. In order to send a correct force-torque direction to the robot controller, an angle sensor is needed on the bearing in this case, which was not necessary in figure 2. The advantage of the design in figure 19 in relation to the design in figure 2 is that the force-torques measuring assembly does not need to take care of the load of the tool. The advantage of the design in figure 2 is that an angle measurement is not needed.

In figure 17b it was shown how a force-torque measuring assembly 97 could be mounted between the tool and the robot to be used for controlling the robot in such a way that a force between the tool and the work object is limited during lead-through programming. However, a force-torque sensor for the control of the tool forces during programming and calibration can also be mounted between the grinding disc 94 and the tool main body 92 during programming, whereby less weight is carried by the force-torque sensor. This arrangement is especially interesting when using dummy tools during programming.

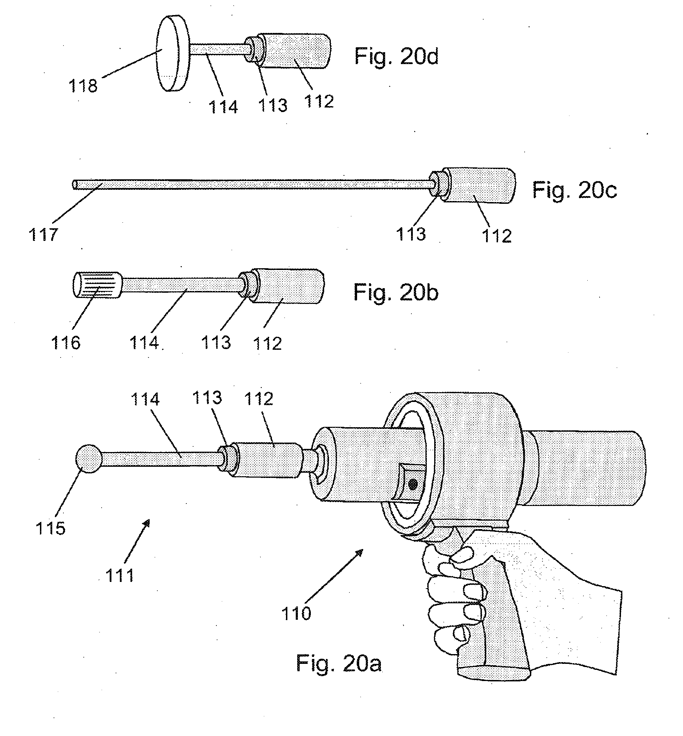

Figures 20a-d show a plurality of different dummy tools including a force-torque measuring assembly 113. Here the tool main body and the lead-through interface 110 from figure 3 is used to exemplify the dummy tool concept. As seen from figure 20a a dummy tool 111 is mounted on the tool main body and is used for calibration and measurement applications. The dummy tool has a measurement sphere 115 on the tip of a rod 114 which can be mounted on the force-torque measuring assembly 113. The force-torque measuring assembly 113, including a 6DOF force-torque sensor, is mounted on an adaptor 112, which is mounted on the tool body during calibration and programming. The force-torque measuring assembly will control the robot to limit the force between the object and the sphere when contact is obtained during the lead-through programming and calibration. When the operator moves the sphere against an object to measure the object surface it does not matter how much he forces the lead-through interface to move into the object, the robot controller will always limit the force and thus the robot movement. Figure 20b shows a deflashing and deburring dummy tool 116. Figure 20c shows a rod 117 to simulate a jet stream from, for example, a burner. Figure 20d shows a disc 118 for polishing, grinding and milling.

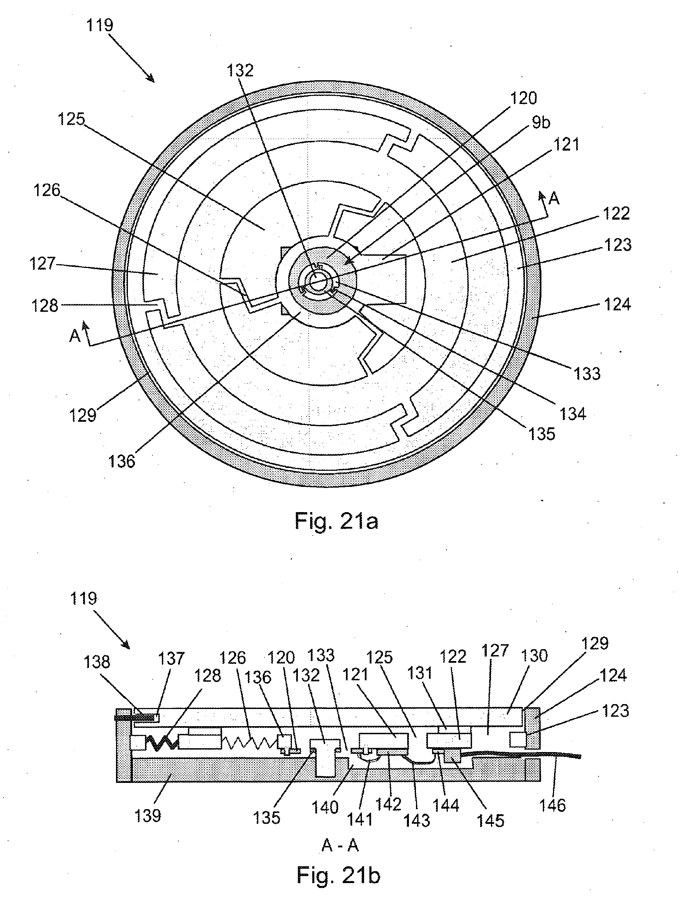

Figures 21a-b show a more detailed drawing of the measuring assembly 119. Figure 21b shows a cross section along the line A-A through the measuring assembly 119 shown in figure 21a. The sensor chip is 9b, for example, made of silicon or other semiconductor materials such as gallium arsenide. The sensor chip with integrated piezoresistive sensing elements includes an outer plate 120 connected to a central ring 135 by means of at least three beams 134 working as spring elements. The hole in the middle of the central sensor ring 135 is used to mount the central part of the sensor using a cylindrical element 132 attached to a bottom plate 139 of the transducer mechanism. The square sensor plate 120 is mounted on an inner transducer ring 136 and this ring also contains a part 121, which is used to mount the measurements and communication electronics chip 142. The sensor plate 120 is bonded with wires 141 to an electronics chip 142, which in turn is bonded with the wires 143 to a contact with bonding element 144 and contact mechanics 145. From this contact 145, a cable 146 with, for example, field bus communication signals, are coming out from the transducer to be connected to, for example, a robot controller.

The inner transducer ring 136 is connected to a central transducer ring 122, on which the external forces and torques are applied. This ring is connected to a faceplate 130 of the transducer via the ring 131, which could be a part of the faceplate 130 or the transducer ring 122. The central transducer ring 122 is in turn connected to an outer transducer ring 123 via a plurality of spring elements 128. When the force-torque levels applied to the central ring 122 are much larger than what the sensor chip 120, 134, 135 is designed for, the stiffness of the spring elements 128 must be higher than the stiffness of the spring elements 126. The inner transducer ring 136 is connected to the central ring 122 via a plurality of spring elements 126. Simultaneously, the stiffness of the spring elements 128 must be selected to be compliant enough for the design of the mechanical force-torque limiters 137 and 138. The limiter 137, 138 comprises three holes in the faceplate 130 and in each hole is provided a cylinder 138 with a diameter that is smaller than the diameter of the hole 137 to prevent faceplate 130 from moving more than a certain maximum movement in 6DOF relative to an outer cylinder transducer wall 124. The cylinders 138 are mounted in the outer cylindrical transducer wall 124 and there are three cylinder/hole pairs with 120 degrees separation around the transducer. Between the outer transducer ring 123 and the outer wall 124 there is a small air gap which is sealed by, for example, a sealing ring. It should be noted that both the sensor plate 120 and the inner sensor ring .135 are mounted from the same side of the silicon chip. This design is made in order to eliminate temperature-induced effects dependent on different temperature coefficients between steel and silicon.

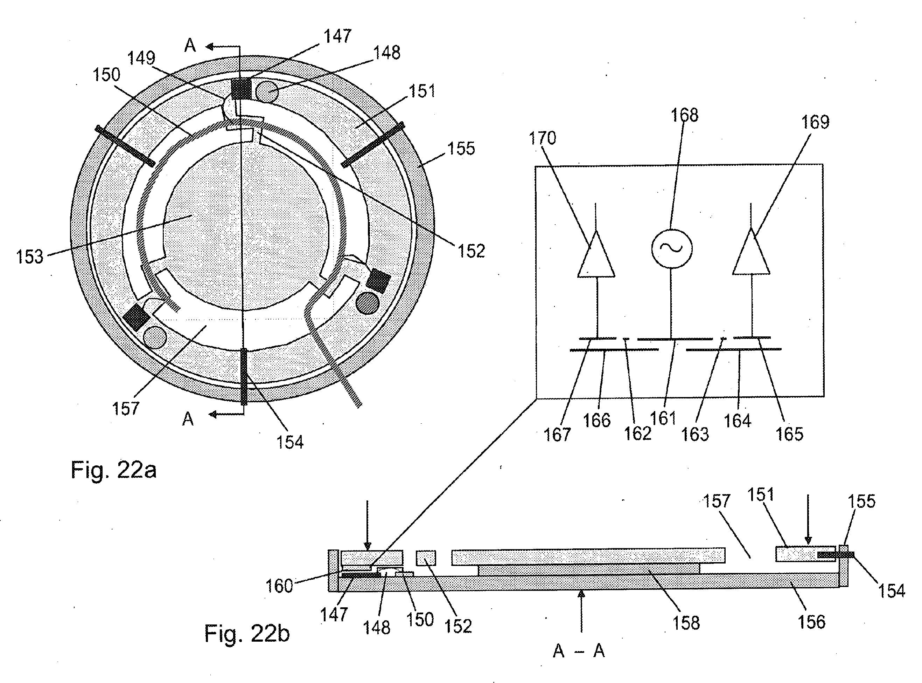

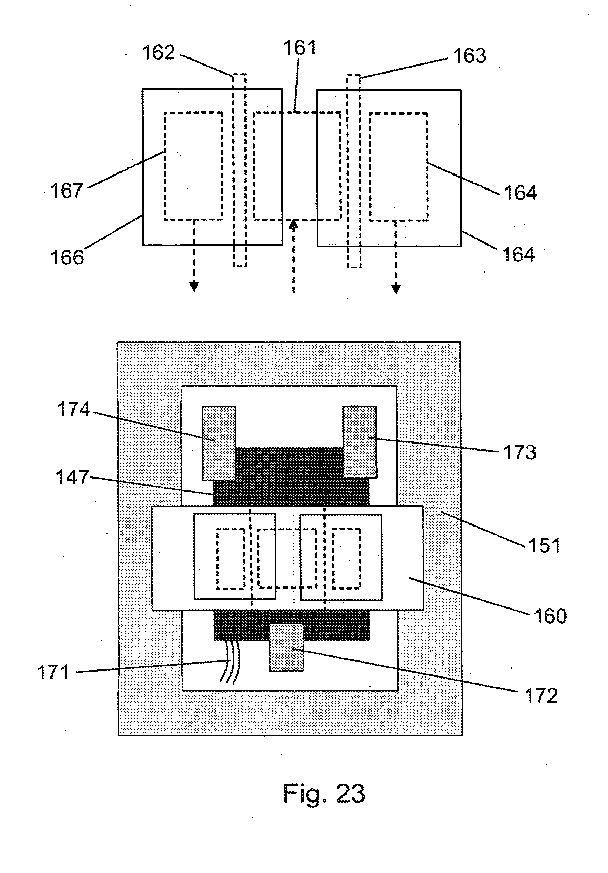

Figures 15 and 16 show another type of measuring assembly including a 6DOF force-torque sensor, which is useful for the lead-through interface. This sensor is based on capacitance measurements, instead of resistance measurement as the measuring assembly shown in figures 21a-b, which includes pierzorestistive sensor elements. The capacitance measurement technology can also be integrated into silicon chips, as shown in figures 22a-b and 23. In this case, see figures 22a-b, the transducer has one outer ring 151 connected to an inner part 153 via spring elements 152. At three positions around the outer ring a semiconductor chip 147, for example a silicon chip, is mounted to measure the distance in 2DOF, tangential and axial, between a bottom transducer plate 156 and the outer transducer ring 151. The distance is measured by at least three electrodes 161, 165 and 167 on the chip surface facing at least two electrodes 164 and 166 on an isolating plate 160 on the other side of the air gap, over, which the 2DOF measurements are made.

The chip 147 contains a high frequency oscillator 168 connected to the electrode 161 and the signal is coupled to the electrodes 165 and 167 and amplified by amplifiers 169 and 170 on the chip 147. The electrodes 164 and 166 are locked on the same insulator plate 160. The electrodes 162, 163, 165 and 167 are locked on the silicon chip 147. The electrodes 162 and 163 are guards to minimize the direct capacity of coupling between the electrode 161 and the electrodes 165 and 167. When the distance between the chip 147 and the insulator plate 160 increases, the sum of the signals from the amplifiers 169 and 170 will decrease and when the insulator plate 160 moves tangentially relative the chip 147, the difference between the signals from the amplifiers 169 and 170 will change. Since these measurements are of non-contact type, the sensor chip will not have to take any forces and the mounting will be less critical in comparison with the sensor chip shown in figure 21a-b.

It will also be easier to limit the movements of the transducer because of the sensor chips, since the only risk of destroying the sensor chips is when the air gap goes to zero. To avoid this, simple steel parts 148 with an air gap somewhat smaller than the measurement air gaps can be used. In order to protect the spring elements 152, the same force-torque limiting concept as in figures 21a-b is used; compare the cylinders 154 with a corresponding cylinder 138 in figure 21b. The sensor chips are bonded to a cabling arrangement 150 with wires 149. It should be noted that figure 22b shows a cross section through the sensor in 22a.

Figure 23 shows the mounting of the silicon sensor chip 147 and the insulator 160. Upwards in the figure is the radial direction of the transducer shown in figure 22a. Figure 23 shows that the silicon chip 147 is mounted with chip holders 172-174 on the side facing the air gap and that the isolator is also mounted on the side facing the air gap by the part 151. The chip holders 172-174 are attached to the bottom transducer plate 156 in figures 22a-b and the part 151 is attached to the transducer ring 151 in figures 22a-b. This mounting arrangement is made to minimize the temperature dependence on the transducer. The wirings named 149 in figures 22a-b is named 171 in figure 23. The electrodes on the silicon chip 147 are shown with broken lines and the electrodes on the insulator plate 160 are shown with continuous lines.

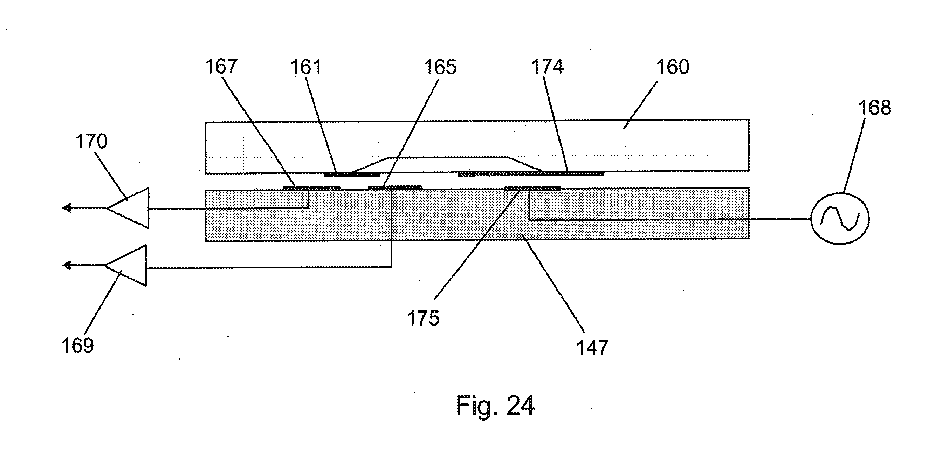

Figure 24 shows an alternative for the electrode configuration. Here electrode 161 is mounted on the isolator plate 160 and it is fed through the capacity of bridge between the electrodes 175 and 174.

Figures 21a-b showed a way to mount the sensor chip 120, 135 in such a way that part 135 was mounted from one side of the sensor chip structure and part 120 from the other side. In order to make the assembly of the sensor easier, it would have been an advantage to mount the sensor chip from one side only, for example by using epoxy adhesive.

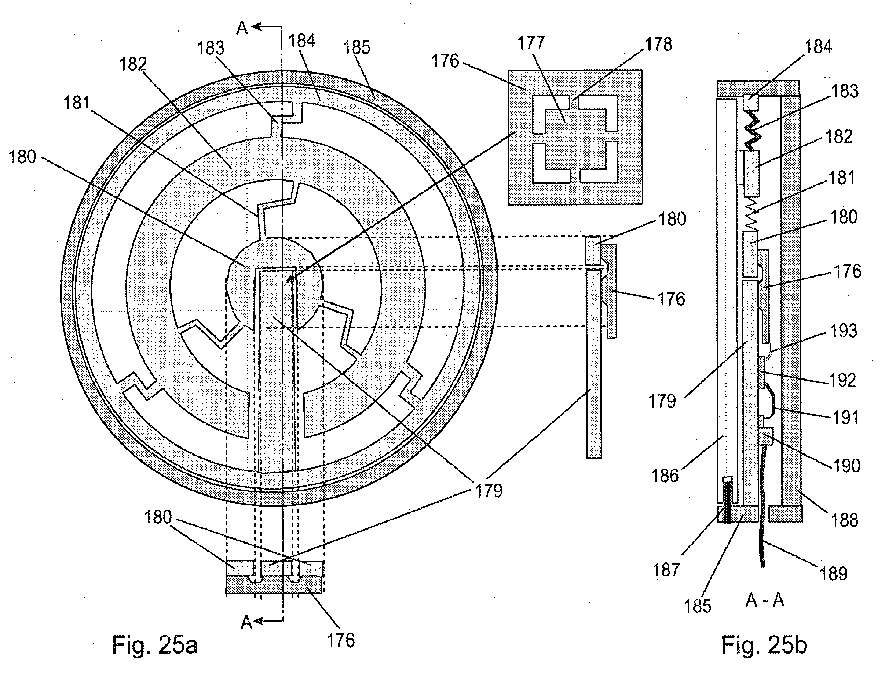

Figures 25a-b show a two-dimensional spring arrangement that makes it possible to mount the sensor chip from only one side. Figure 25a shows the two-dimensional spring arrangement from above with an outer ring 184 mounted on the sensor housing 185, with an inner ring 184 designed for mounting on the sensor flange, denoted 186 in figure 25b, and a sensor attachment part 180. Between the outer ring 184 and the inner ring 182 there are mounted shunting springs 183 and between the inner ring 182 and the sensor attachment part 180 there are arranged sensor springs 181. In this embodiment the sensor chip has an outer part 176, an inner part 177, and beams 178 connected to the inner and outer part of the sensor chip (see the inserted drawing). The outer part 176 of the sensor chip is mounted on the sensor attachment part 180 and the inner part 177 of the sensor chip is mounted on a beam 179 connected to the outer ring 184 of the spring disc. In this way the sensor structure can be one-sided mounted on the spring structure as is evident from the two side perspective views of the sensor mounting.

Figure 25b shows a cut through the whole sensor structure and shows that the bonding on the sensor chip will now be very easy to do and can be made after the mounting of the sensor chip on the spring structure. Otherwise, the sensor mounting is the same as in figures 21a-b with sensor mounting flange 186, overload protection 187, sensor housing 185, 188, connection cable 189, connector 190, bondings 191, 193, measurement electronics chip 192, sensor chip 176, spring structure parts 180-184 and mounting beam 179. Both the spring structure and the mounting beam 176 can be manufactured from the same disc, for example, by laser cutting of a sheet of metal. Of course, more elaborate structures can be used with the goal to have one part of the structure making connections between the sensor housing 185 and one part of the sensor structure 176 or 177, and another part of the structure making connections between the sensor flange 186 and the outer part of the sensor-structure 177 or 176.

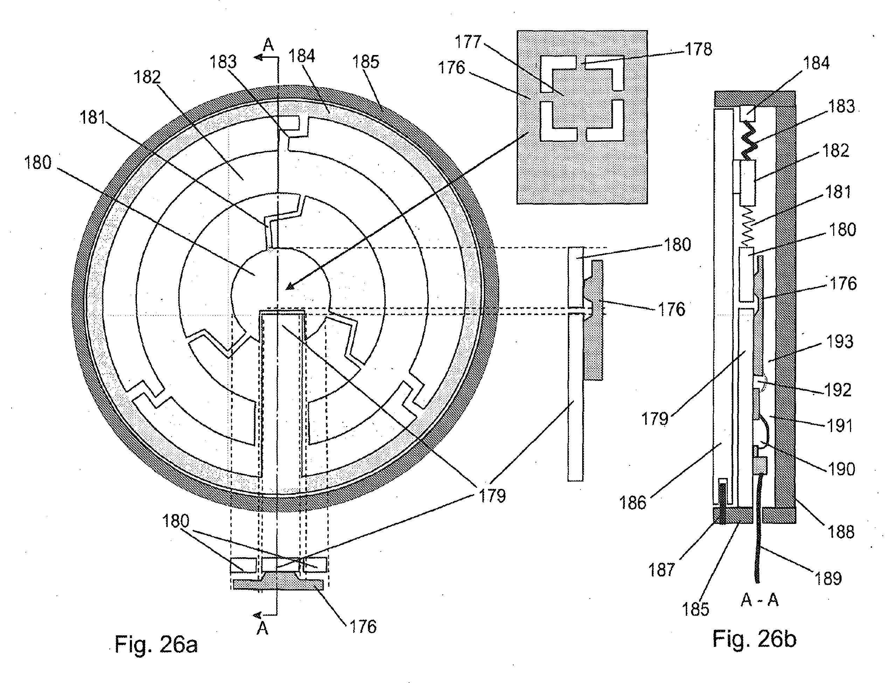

Figures 26a-b show approximately the same spring arrangement as in figures 25a-b, but here the mounting beam 179 is instead mounted on the outer part 176 of the sensor chip and the sensor mounting part 180 is mounted on the inner part of the sensor chip 177. In order to obtain large mounting areas, the sensor chip is elongated in one direction and the mounting beam 179 does not reach into the centre of the spring disc. In other words, figures 26a-b are identical with figures 25a-b.

The sensor structure shown in the figures 25a-b and 26a-b is a standard beam structure used in 6DOF force-torque sensors. Each beam needs to have two or four piezoresistive sensors mounted in pairs, and when the beam width is becoming small it may be difficult to get space for the parallel sensor pairs and it may also be difficult to get an isotropic sensor behavior with respect to the 6DOF.

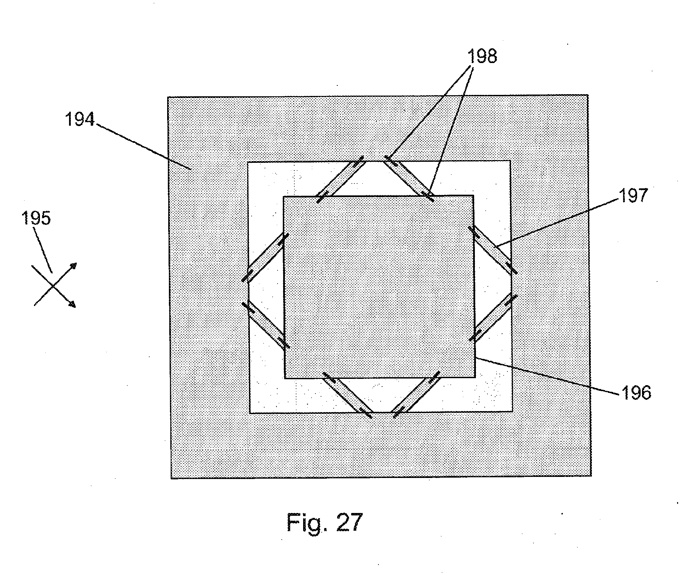

Figure 27 shows a sensor having a beam structure, which reduces the problems mentioned in the above section. Here a two-dimensional ocotopod structure is used including eight beams 197 arranged in pairs extending in orthogonal crystal direction between an outer plate 194 and an inner plate 196. Each beam 197 is equipped with two piezoresistive sensor elements 198.

The outer plate 194 and the inner plate 196 have a rectangular shape. Between opposite sides facing each other of the outer and inner plate two orthogonal beams 197 are mounted. Each beam 197 contains two piezoresistive sensors 198. The beams connect the outer plate 194 with the inner plate 196 of the chip. In order to obtain high piezoresistivity, the piezoresistive sensor must be mounted in either of two crystal directions 195 and the beams should therefore be given a layout in these directions.

As pointed out earlier the two dimensional spring concepts are difficult to miniaturize since they need a certain disc area to implement the spring compliances needed. Therefore, in the cases when very small force-torque sensors are needed, as in figures 4-7, three-dimensional spring concepts are needed instead.

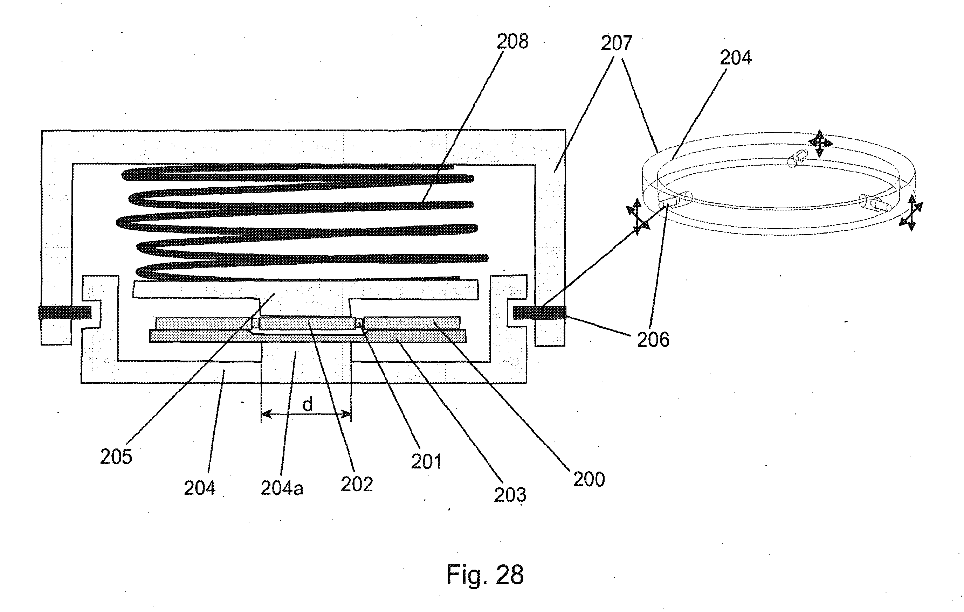

Figure 28 shows a simple three-dimensional spring concept including the use of a spiral spring mounted on a sensor chip. A spring 208 is mounted between a sensor housing 207 and a sensor mounting plate 205. The sensor mounting plate 205 is in turn mounted on the inner plate 202 of the sensor chip. The outer plate 200 of the sensor chip is mounted on a chip holder 203, which should have the same temperature coefficient as the sensor material. For silicon sensor chip examples of such materials are silicon, special glass materials and invar.

The chip holder 203, in turn, is mounted, in its centre, on the sensor flange 204. The chip holder 203 works as a substrate on which the outer part of the sensor chip 200 is mounted. When, for example, the temperature increases the substrate 203 will expand exactly as much as the sensor chip 200 and no stress will arise in the beams 201 of the sensor chip and the piezoresistive sensor elements will not change its resistances because of temperature induced stress in the beams. However, between the substrate 203 and a metal part 204a of the flange 204 that is attached to the substrate there is a large difference in temperature coefficients and stress will be introduced in the substrate when temperature changes. In order to avoid that this stress is transferred to the sensor chip, the metal part 204a has a smaller diameter d than the substrate 203. Thereby the stress will be local in the substrate and if the substrate is thin at the interface to the metal and thick in the interface to the sensor chip, as in the figure, stress transfer will be low. As an alternative, the substrate 203 could be made larger than the sensor chip and the metal interface could be outside the interface between the substrate and the sensor chip.

In figure 28 no shunting springs are used and it is assumed that the sensor chip can be used for the whole measuring range of the sensor, typically 100 N and 20 Nm for the lead-through applications. Forces and torques outside the measuring range are taken care of by the overload protection 206, which is made in the common way with three pins in three holes with larger diameters than the pins, as illustrated in the right schematic drawing. For higher measuring ranges it will be necessary to use a shunting spring.

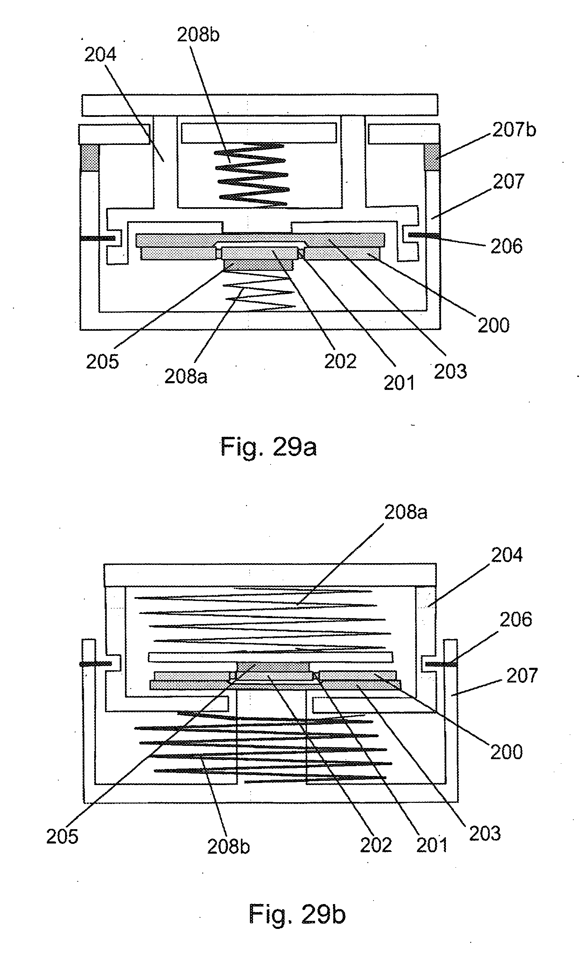

Figures 29a and 29b show two examples of the use of shunting springs. The mounting of the sensor structure is the same as in figure 28, but the structure to hold the springs will be more complicated. Thus, the measuring assembly shown in figure 29b includes a faceplate structure 204, which is connected to a shunt spring 208b, a sensor holder 203 and an overload protection device 206. The sensor spring 208a is mounted directly on the sensor housing 207. To avoid temperature induced stress also in the central part 203 of the sensor chip, a sensor mounting part 205 made of a material with the same temperature coefficient as the sensor material is mounted in mechanical contact with the inner part 202 of the sensor. For temperature compensation, the sensor assembly is also equipped with an element 207b having the same temperature coefficient as the sensor material. This element could have about the same thickness as some of the thickness of the sensor chip and its mounting parts 200,203 and 205. In figure 29b an alternative version of the shunt spring equipped sensor assembly is shown. Here a shunting spring 208b is mounted between the sensor housing 207 and the sensor flange structure 204, while the sensor spring 208a is mounted between the sensor structure 205 and the sensor flange structure 204. Of course, in both figures 29a and 29b the sensor structures with its holder can be mounted up and down in relation to what has been drawn in the figure.

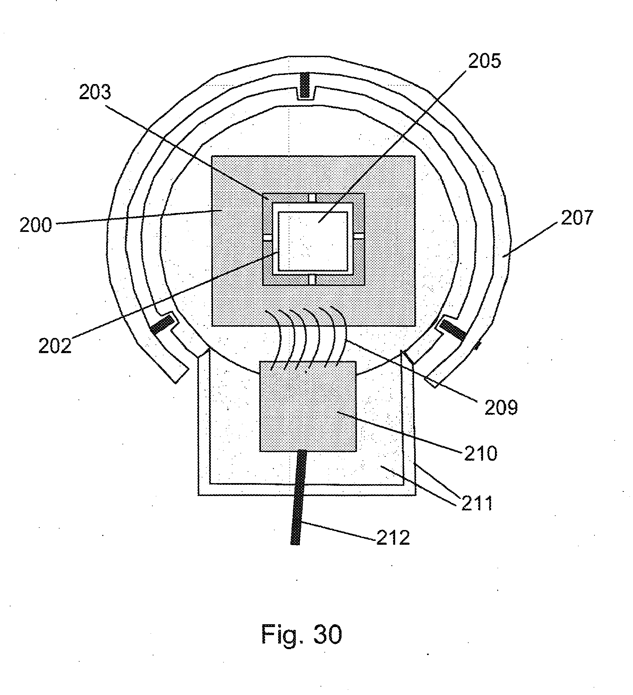

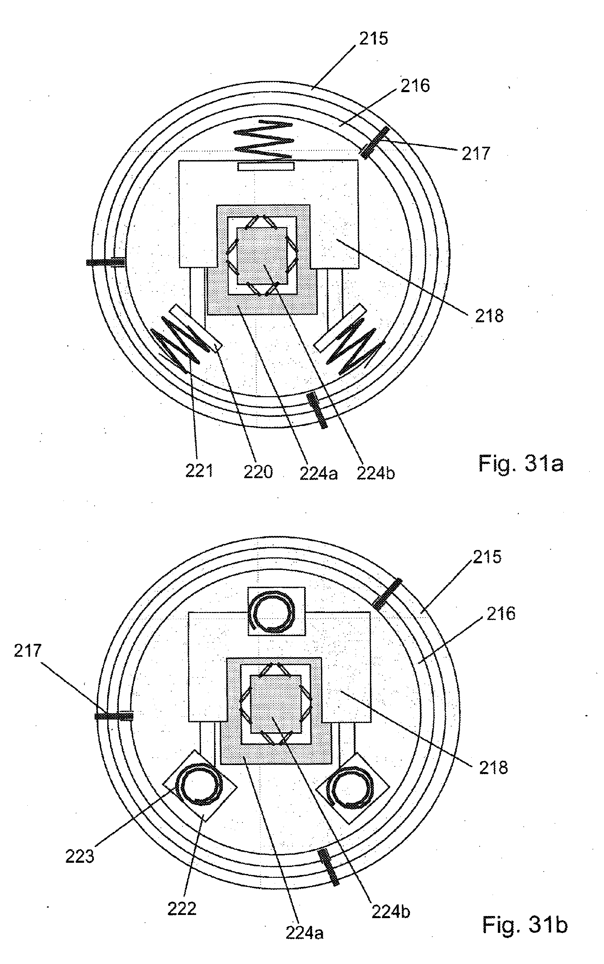

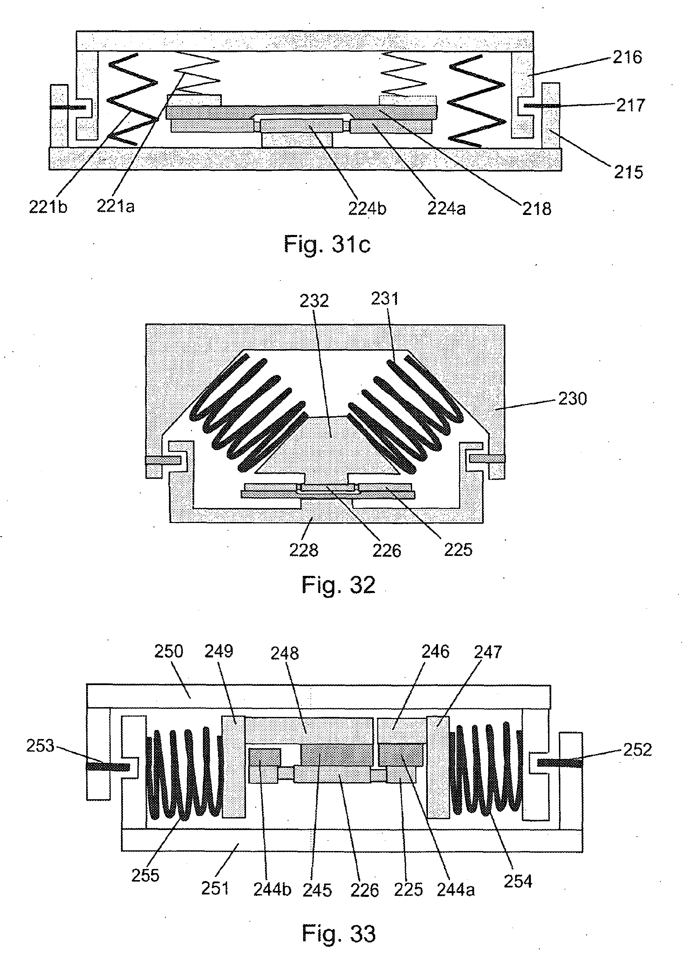

Figure 30 shows an example of how the sensor assembly in figure 28 will look like as seen from above when the spring is removed. As can be seen the sensor housing 207 has a part missing making it possible to place the measuring electronics 210 in an electronics housing 211 close to the measuring assembly. The electronics chip 210 is bonded 209 to the sensor chip 200 in such a way that the bondings will be situated below the spring (compare figure 28). The mounting of the measuring assembly is as in figure 28 with the spring mounting part 205 mounted on the inner part 202 of the sensor and where the outer part 200 of the sensor is mounted on the underlying sensor holder 203. Of course, this holder 203 can be made in such a way that there will be room for the bonding on the other side of the measuring assembly, whereby of course the piezoelectric sensors will also be placed on this side. A cable 212 is connecting the sensor electronics to, for example, the robot controller. Instead of using a single spring for sensor connection as in figure 28 more springs can be used to better control the compliance of the sensor in the 6 degrees of freedom. Figures 31a-b show two examples with three springs 221 arranged between the sensor 224a-b and the sensor flange 218. In figure 31 a the spiral springs are mounted in the same plane as the sensor chip 224a-b and in figure 31b the springs 223 are mounted perpendicular to the sensor chip surface. Looking at figure 31b, the springs 221 are mounted between the sensor flange ring structure 218 and spring holders 220, which are parts of the sensor mounting part 218, in turn mounted on the outer sensor plate 224a. The inner sensor plate 224b is mounted on the sensor housing 215. The measuring assembly further comprises an overload protection arrangement 217. In figure 31b the springs 223 are mounted perpendicular to the sensor chip 224a-b and this is made by mean of mounting plates 223, connected to the sensor mounting part 218. The other side of the springs 223 is mounted on the sensor flange.

Also for a multi-spring arrangement it is possible to introduce shunting springs. An example of this is shown in figure 31c. Here shunting springs 221 b are directly mounted between the sensor flange 216 and the sensor housing 215. The inner plate 224b of the sensor chip is mounted on the bottom of the sensor housing and the outer plate 224a of the sensor chip is mounted on the sensor holder 218, which in turn is mounted on the sensor springs 221a. As in many of the figures with the sensor assembly seen from side, the cut is not straight in order to visualize the spring shunting principle.

Figure 31a exemplifies how the springs could be mounted either in parallel or perpendicular to the sensor chip. In many cases the best solution with respect to isotropy is to use a tripod or a hexapod arrangement of the springs. Thus, figure 32 shows an example of how the springs can be arranged with a certain angle relative to the sensor chip to obtain a three dimensional tripod spring structure. The sensor springs 231 are mounted between the sensor flange 230 and the sensor mounting part 232 with about 45 degrees angle in relative to the sensor chip 225, 226. The angle is simply achieved by, for example, milling 45-degree plans in the sensor flange 230 and the sensor mounting part 232.

Also in the case of using three dimensional springs it is possible to have a one-sided mounting of the sensor chip on the spring system as was shown for the 2D (two dimensional) spring assembly in figures 25 and 26. Thus, figure 33 exemplifies an assembly with one-sided mounting of the sensor chip 225,226. The central part 226 of the sensor chip is mounted on the part 245, which is connected to the spring 255 through the parts 248 and 249. The sensor outer plate 225 is mounted on the part 244 (with smaller thickness at the left 244b part than at the right 244a part). The 244a part mechanically connected to the spring 254 via the parts 246 and 247. The spring 255 is connected to the sensor housing 251 and the spring 254 is connected to the sensor flange 250. Between the sensor housing and the sensor flange there are the overload arrangements 252 and 253. The parts 244 (244a and 244b are connected) and 245 are preferably made of a material with the same temperature coefficient as the sensor chip, which means that the distance of temperature mismatch is only the air gap between the parts 248/245 and 246/144a. Since the sensor is very stiff, the gap can be very small and the temperature dependence of the sensor because of mismatch of temperature coefficients can be very small. Moreover, the gap is in series with the springs so only very small forces will be obtained because of gap width changes caused by temperature changes.

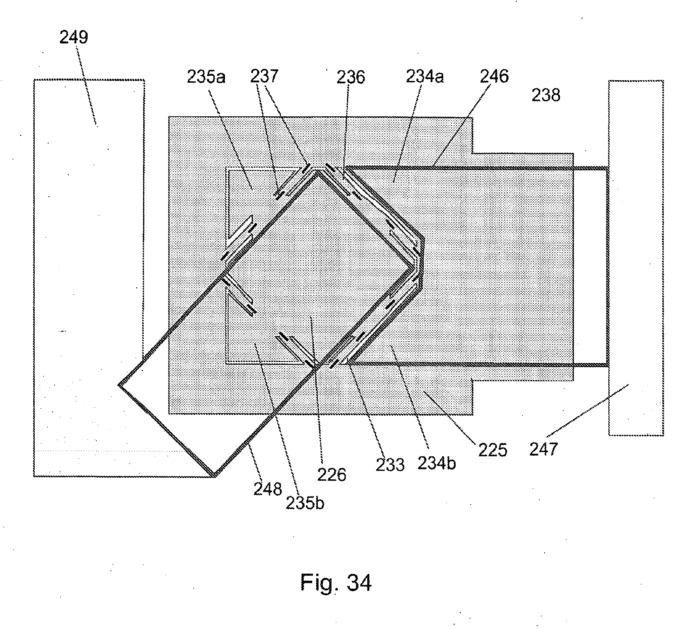

One example of a layout of the sensor chip and the mounting connections to the chip, as described in figure 33, can be seen in figure 34. Here the sensor parts 225 and 226 have been modified to make the mounting of the attachments 246 and 248 (via 244a and 245) as tight as possible with respect to the temperature effects. Thus the sensor part 225 now also contains corners 234a and 234b and the sensor part 226 corners 235a and 235b. The beams 236 with its piezoresisitive sensors 237 are located between the quadratic centre part 226 and the corner parts 234 and 235. The attachment 246 is glued to the right outer part 225 of the sensor chip including the corner parts 234a and 234 b and the attachment 248 is glued to the centre part 226 including the corner part 235b. The springs are mounted on parts 247 and 249, which are mechanically attached to parts 246 and 248, respectively. Beside that this sensor design makes a better attachment possible, it will also have the advantage that less semiconductor material needs to be etched away, compare the sensor design in Figure 27.

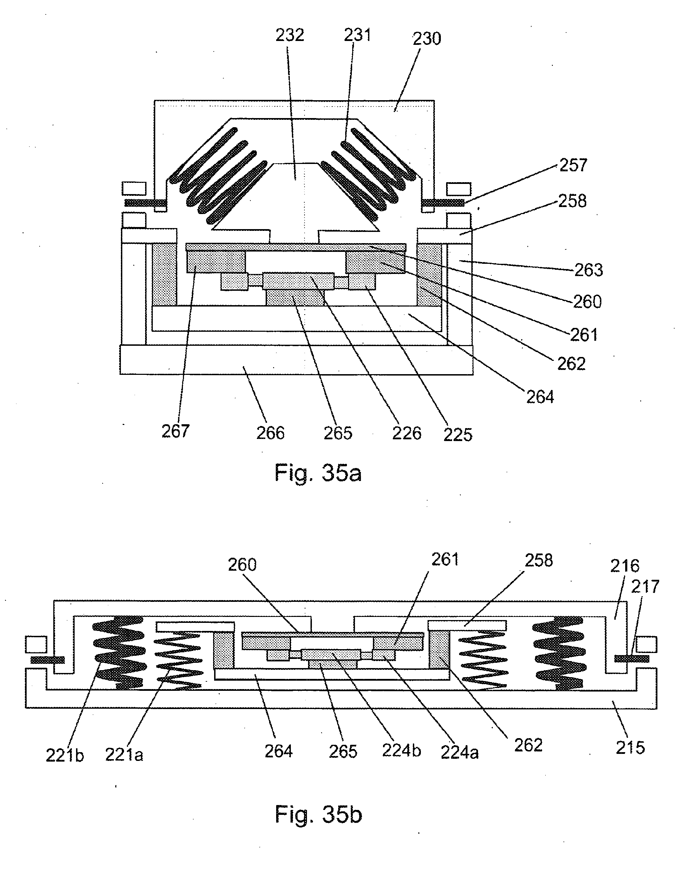

For a total compensation of the temperature effects caused by the use of material with different temperature coefficients, the sensor design in figure 35a can be used. The spring mounting is the same as in figure 32 with the sensor springs 231, the sensor mounting part 232, the sensor flange 230 and the overload protection 257. However, a part 262 is introduced with the same temperature coefficient as the sensor chip 225, 226, the sensor holder 261,262, and the sensor central attachment part 265. This part 262 should have the same height as the sum of the height of the parts 265, 226, 262 and 261. If the temperature compensation part 262 has a lower temperature coefficient, its height could be lower. One possibility is to arrange the part 262 as a ring according to the figure and then mount it between the disc 264 and the ring 258. The ring 258 is mounted on the tool housing 263/266. The parts 264 and 258 should have the same temperature coefficient as the parts 266, 263, 232 and 230 and the same temperature coefficient as the structure that the sensor is mounted into, usually steel or aluminium.

The same principle for temperature compensation as shown in figure 35a is shown in figure 35b for a sensor with shunting springs. Thus, the shunting springs 221b are mounted between the sensor housing 215 and the sensor flange 216 and the sensor springs 221 a are mounted between the sensor housing and the sensor attachment arrangement already described for figure 35a. Thus, parts 262, 265, 224a-b, 261 and 260 have the same temperature coefficient while the rest of the sensor assembly is made of, for example, steel or aluminium.

When a handle with an integrated 6DOF force-torque sensor is mounted on a tool, it is possible to have the tool including the handle calibrated by the robot or tool manufacturer, which means that the robot controller knows the coordinate system of the force/torque sensor in relation to the tool coordinate system. This is, of course, necessary for the controller to know in order to move the robot in the handle tool coordinate system when the handle is engaged by the robot operator. However, in the case when the tool is fixed in the robot cell and the robot holds the work object, the operator in many cases needs to calibrated the coordinate system of the handle. It is then important to have a method for easy calibration of the handle.

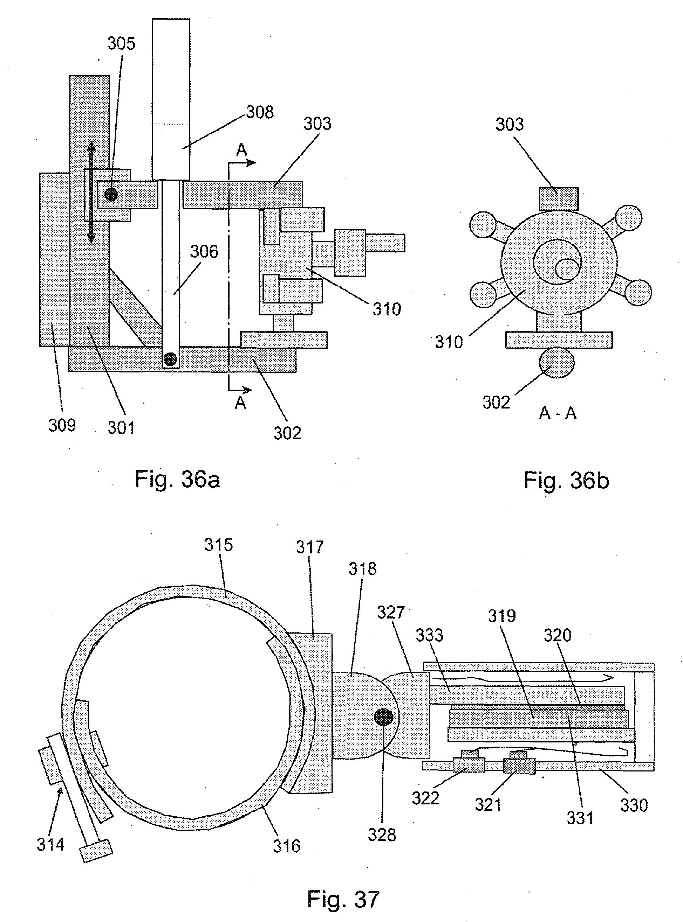

Figure 36a-b shows an example of a situation when the operator needs to mount the handle on a work object 310 in order to program the robot to perform work object calibration and processing motions. A gripper with a fixed fork 302 and a movable fork 303 clamps the work object 310 using a hydraulic cylinder 308 with a piston 306. The movable fork 303 can be manually indexed on the linear guide way 301 with the cart 305, which holds the end wall 303, which is connected to the cart with a shaft. The gripper is mounted on the robot wrist 309.

Figure 37 shows a handle arrangement that can be used to clamp the handle at different places on the work object held by the robot. The handle itself consists or an outer tube 330 connected to one side of a force sensor 319 inside the tube. The other force sensor side is connected to the handle mounting part 327. On the handle there are two switches, of which the switch 321 is a 3-position safety switch. The switch 322 is used, for example, for communicating with the controller to define a programmed position. Using speech communication this could be a soft key, meaning that it could have different functions depending on the programming or calibration state as defined during the speech communication between the operator and the controller. The keys and the 6DOF force-torque sensor 319 are connected to the robot controller with a cable or by means of wireless communication. The handle mounting part 327 is connected to a handle-clamping device via a shaft 328, which can be locked at a suitable angle for the accessibility of the handle. The handle-clamping device consists of two flexible steel bands 316 and 317, which together form a circle, the radius and shape of which can be changed with the screw 314. The steel band assembly is fixed to parts 317 and 318, which in turn are connected to the handle.

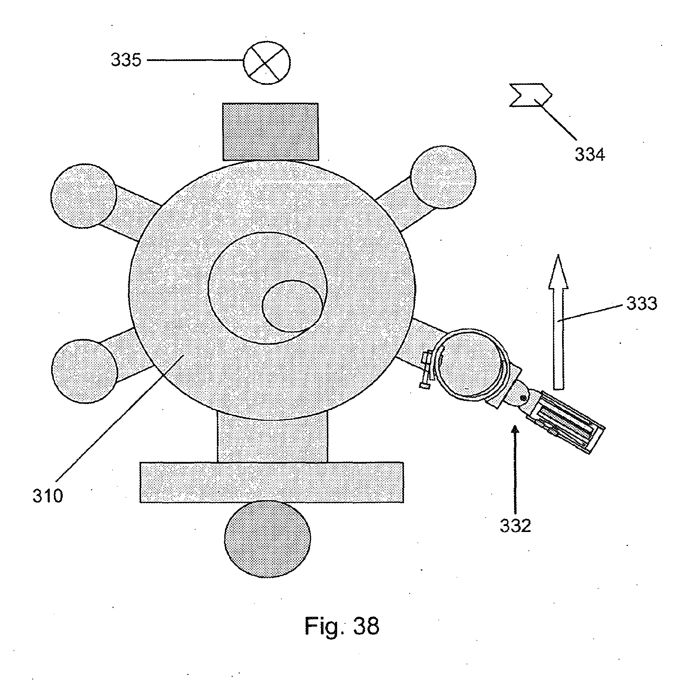

Figure 38 exemplifies how the handle 332 is clamped around a cylindrical part of the work object 310. Now a method is needed to define the local coordinate system of the handle 332. This figure exemplifies the following method:
1. The controller asks the operator to press the handle vertically upwards (or downwards) 333.
2. The controller records the signals from the Force/Torque sensor: (Xz, Yz, Zz, Rxz, Ryz and Rzz).
3. The controller asks the operator to press the handle towards the centre (axis 1) of the robot 335.
4. The controller records the signals from the Force/Torque sensor: (Xr, Yr, Zr, Rxr, Ryr and Rzr).
5. The controller asks the operator to press the handle in an anticlockwise (or clockwise) direction with respect to axis 1 of the robot 334.
6. The controller records the signals from the Force/Torque sensor: (X+, Y+, Z+, Rx+, Ry+ and Rz+).
7. The controller can now calculate the directions of the coordinates of the force-torque sensor coordinate system and can make a transformation of the force-torque sensor signals to the tool coordinate system.
8. The controller is set to lead-through manipulation.
9. Optionally the operator makes a vertical verification motion. If he is not satisfied with the resulting motion he can either repeat steps 1-8 or define on a graphic display or only by the number of degrees how much he will change the direction of motion. He can then do the same to tune the direction towards the centre of the robot.

Instead of asking for certain directions to apply forces on the handle, the robot may first show a motion direction by moving the work object in a certain direction and then ask the operator to apply the force or torque he wants to correspond to the movement shown by the robot.

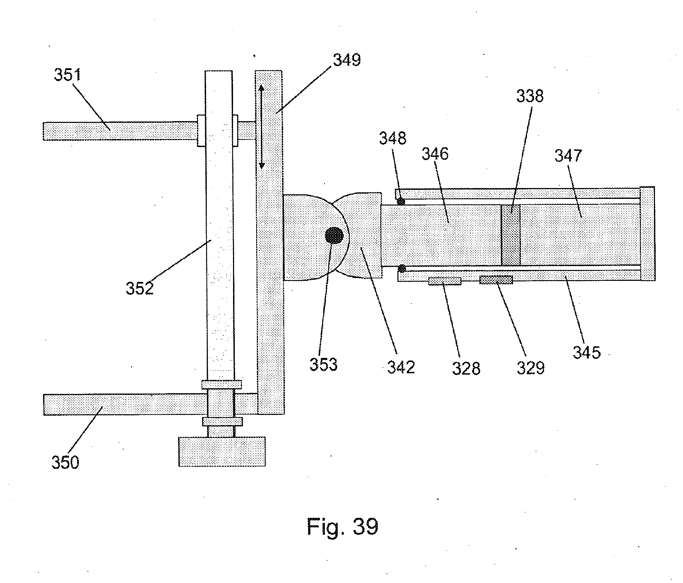

Figure 39 shows an alternative design of the handle and its clamping mechanism. The handle is also here a tube 345, which via the element 347 is mounted on one side of the 6DOF force-torque sensor 338. The other part of the sensor 338 is connected by 346 to the clamping mechanism via parts 346 and 342 and the shaft 353 possible to lock in different angles. On the handle there are the switches 328 and 329, of which switch 329 is the safety switch. The clamping mechanism consists of one fixed fork 350 and one movable fork 351. The movable fork 351 is possible to move along the guide way 349 by means of the screw 349, which is used to obtain the clamping forces needed to fix the handle. Even if a safety switch is enough to guarantee safety when the robot is in manual mode, it is possible to have a mechanical or magnetic clutch between the clamping mechanism and the handle. This clutch could have a built-in electrical connection, which is disconnected when the clutch opens at a certain force or torque between the handle and the clamping device.

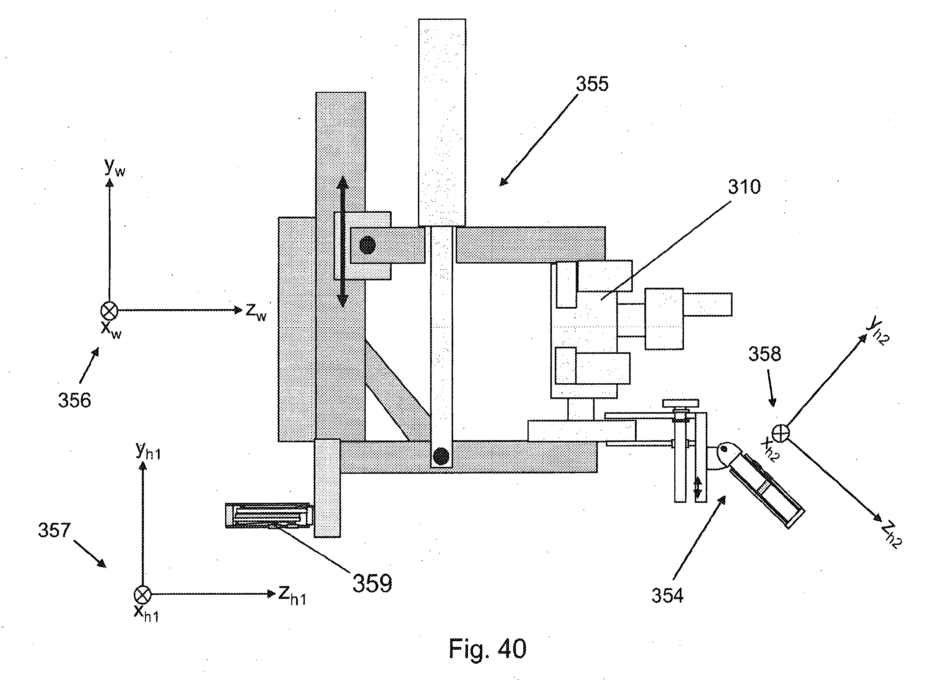

Figure 40 shows how the handle in figure 3 is clamped on the work object 310, which is in turn clamped by the gripper 355. As in figure 1 the gripper is mounted on the tool flange of the robot. This figure shows the wrist coordinate system 356 (Xw, Yw, Zw) as well as the coordinate systems 357, 358 of two handles. A first handle 359 is mounted on a calibrated position on the gripper and its coordinate system (Xh1, Yh1, Zh1) has the same directions of the coordinate axes as the wrist coordinate system, which, of course, is not necessary. A second handle is clamped on the work object in a position that makes it easy to access during the lead-through calibration and programming activities. For even better accessibility the handle has been fixed downwards, which means that its coordinate system 358 is tilted (Xh2, Yh2, Zh2). Using two handles the calibration of handle 354 can be made according to the following method:
1. The controller is set to lead-through for one of the handles, for example the already calibrated handle 359.
2. The operator moves the robot in a specified direction with handle 359.
3. The controller records the direction (Xh1a; Yh1a, Zh1a).
4. The operator exerts a pressure on handle 354 in a direction that corresponds to the direction that the robot moved under 2. If possible, steps 2 and 4 can be made simultaneously if the operator makes use of both his hands to grip both the handles.
5. The controller records the direction (Xh2a, Yh2a, Zh2a)
6. Steps 2-5 are repeated for 2 other directions, which should be made so that all the 3 learning directions will be as orthogonal as possible. This will give the following added recording for the controller: (Xh1 b, Yh1b, Zh1 b), (Xh2b, Yh2b, Zh2b) (Xh1b, Yh1b, Zh1b) and (Xh2b, Yh2b, Zh2b).
7. Optionally the operator can repeat steps 2 - 5 for more directions, giving redundant information, which can be used to obtain a better calibration quality.
8. The controller calculates the coordinate transformation matrix between the handles 354 and 357. Since it is difficult for the operator to obtain accuracy in the pressure direction on the handles, the recorded data will contain errors and a best fit calculation can be made when the coordinate transformation matrix is calculated. The more recordings that have been made in different directions, the better can the best fit results be. A Singular Value Decomposition can also be made to check that the directions used in the calibration are not to close to each other with respect to their differences in angle.
9. The operator can remove the reference handle 359. It should be mentioned that the reference handle could be the same as the handle that will be used during the lead-through work. Then the handle 354 should be easy to detach and attach to its clamping device as well as to the reference attachment on the gripper.

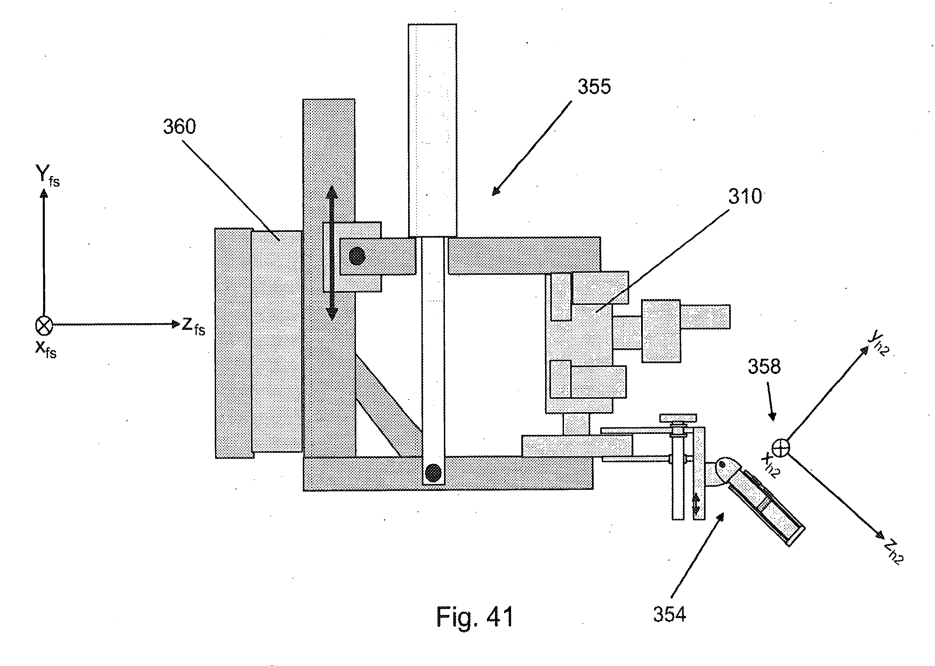

Figure 41 shows the same arrangement as in figure 40 but the reference handle 359 is replaced by a 6DOF force-torque sensor 360 mounted between the gripper (366) and the robot mounting flange. This is the case if force controlled processing will be made by the robot. This method means the following steps:
1. The controller is set to lead-through with respect to the force-torque sensor 360.
2. The operator moves the robot in a specified direction holding the handle 354
3. The controller records the directions given by the force-torque sensor (Xfsa, Yfsa, Zfsa) and the handle (Xh2a, Yh2a, Zh2a)
4. Steps 2 - 3 are repeated in at least two other directions, which should be made so that all the 3 learning directions will be as orthogonal as possible.
5. The controller calculates the coordinate transformation matrix between the handles 354 and the force-torque sensor 360.
6. The controller can start lead-through control from the force-torque sensor in the handle 354.

This method is, of course, the most intuitive one and will be easy to perform and will give a very good result.

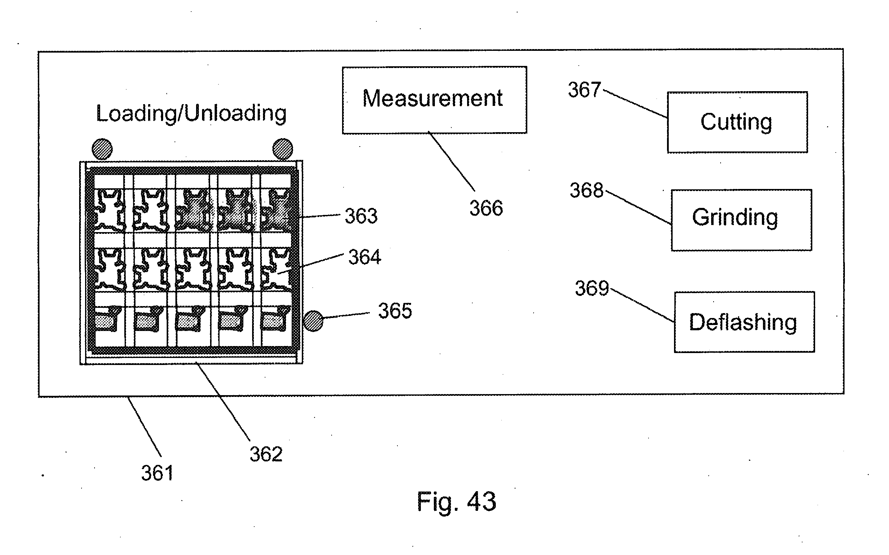

Figure 43 shows a robot cell 361, in which the lead-through is used for work object calibration and process programming. The work objects, in this case castings, were placed manually on a plate 362 in an earlier process stage and the plate was moved in position between 3 poles (365). The castings are placed on the plate with a large enough accuracy (about +/- 50 mm) for the robot to clamp them according to Figure 1. When the robot is programmed using lead-through the following is made.
1. A handle is mounted on the gripper. If it is the first time the gripper is used and the handle is not calibrated to the gripper mounting, a calibration is made, for example according to figure 3 or figure 6.
2. With the handle on the gripper the robot is lead-through programmed to go down to the plate, position the gripper forks at a suitable place for gripping.
3. A clamping is ordered, for example by speech communication, and then the gripper is moved with lead-through to a position where the handle is mounted on the casting for good accessibility.
4. The handle is calibrated according to any of the methods previously described.
5. Lead-through programming of the calibration movements is made, whereby the casting is moved to the measurement station 366. In the simplest case it is just a pin with a force sensor and the casting is brought in contact with the pin in different positions on casting surfaces. This calibration method will take a long time to program but it is a robust and cheap method. Instead of a fixed pin with a force sensor, a position measurement probe can, of course, be used as an LVDT. For fast programming and execution of the calibration of the casting, a laser scanner or a 3D vision system can be used.
6. Lead-through manipulation is made to the cutting station 367, where the cutting movements are defined by lead-through programming.
7. Lead-through manipulation is made to the grinding station 368, where the grinding movements are defined by lead-through programming.
8. Lead-through manipulation is made to the deflashing station 369, where the deflashing movements are defined by lead-through programming.
9. Lead-through manipulation is made to the plate 362, where the casting is unloaded.

It should be mentioned that an exchange of position of the handle might be needed between two processes to have the accessibility needed for the lead-through activities. I some cases it could also be needed to make measurements on raw casting but process programming on a casting that has been manually cut, grinded and deflashed.

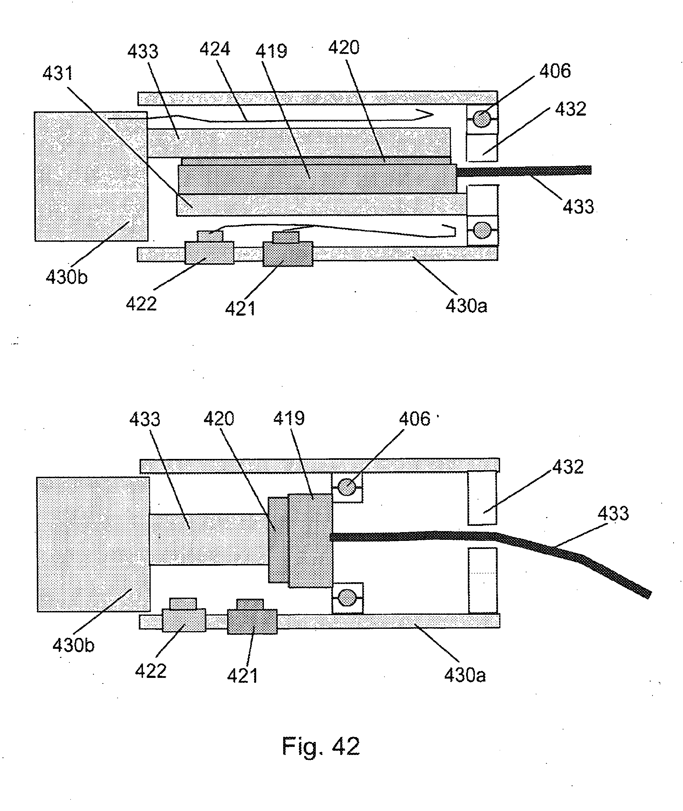

Figure 42 gives some modified design examples for the handles including bearings used for tools where the handle with its bearings does not need be mounted outside a tool centre. Thus, the design in Figure 42 cannot be used in the cases shown in figures 7 and 10 but in situations as in figures 12 and 18. In the upper drawing in Figure 42 the outer handle cylinder 430a with the electrical switches 421 and 433 is mounted in the left end on the bearing 406. The inner part of the handle consists of the force sensor with its housing 419 and flange 420, mounted between parts 431 and 433. The part 431 is mounted on the bearing 406 such that it can rotate relative the outer handle cylinder 430a. The part 433 is mounted on the handle attachment 430b, which can be attached to, for example, a grinding machine. The force sensor cabling 433 comes out from the end of the handle, and the wires from the switches 422 and 421 can be integrated with the force sensor wires. Thus, when attaching the handle to the tool, all electrical connection follow the handle. As an alternative the handle can contain a battery and the signals from the sensor and the switches can be sent to the controller by safe wireless communication. The lower drawing in Figure 42 shows the variant when the force sensor can be mounted axially in the handle. By mounting the bearing 406 inside the outer handle tube 430a and close to the force sensor housing, part 431 in the upper figure is not needed.

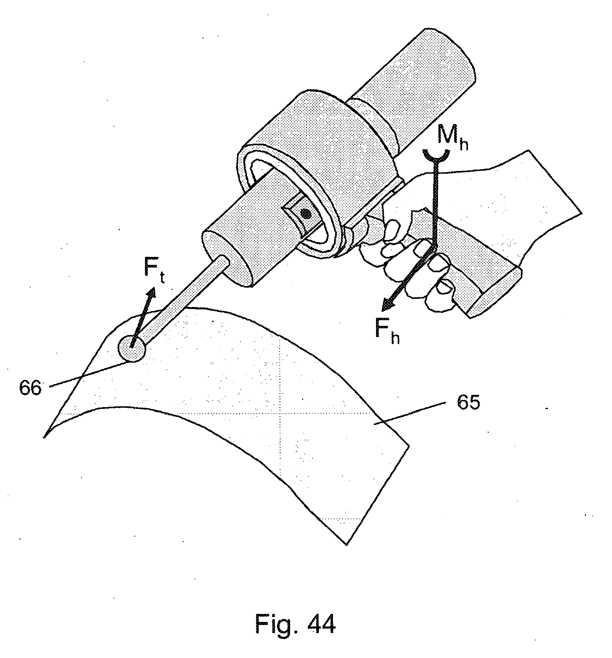

In order to design the control concepts needed to manipulate the tools according to the intentions of the operator, some use cases will be described. Thus, Figure 44 outlines the case when the tool 115 according to Figure 21 is used to measure points 66 on the surface 65 of an object. To control the movements of the tool the operator generates the force Fₕ and the torque Mₕ on the handle, and when contact is obtained between the ball on the tool and the surface of the work object, a tool force Fₜ is generated, with a direction given by the vector sum of the force normal to the surface and the friction force tangential to the surface.

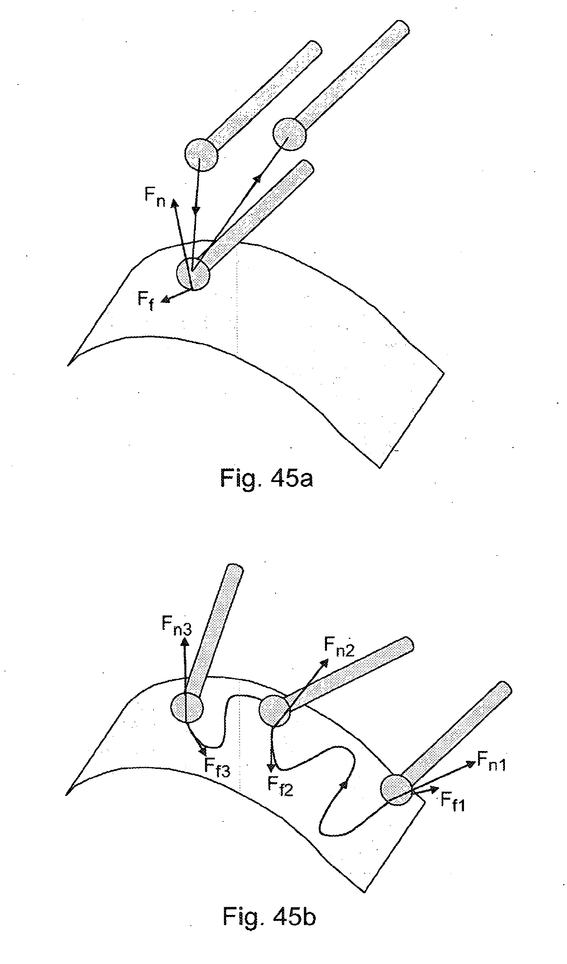

The surface measurements can be made in two ways, either by moving the tool down to the surface, registering a point and moving the tool away from the surface again according to figure 45a, or by moving the tool along the surface and registering points along the path according to figure 45b.

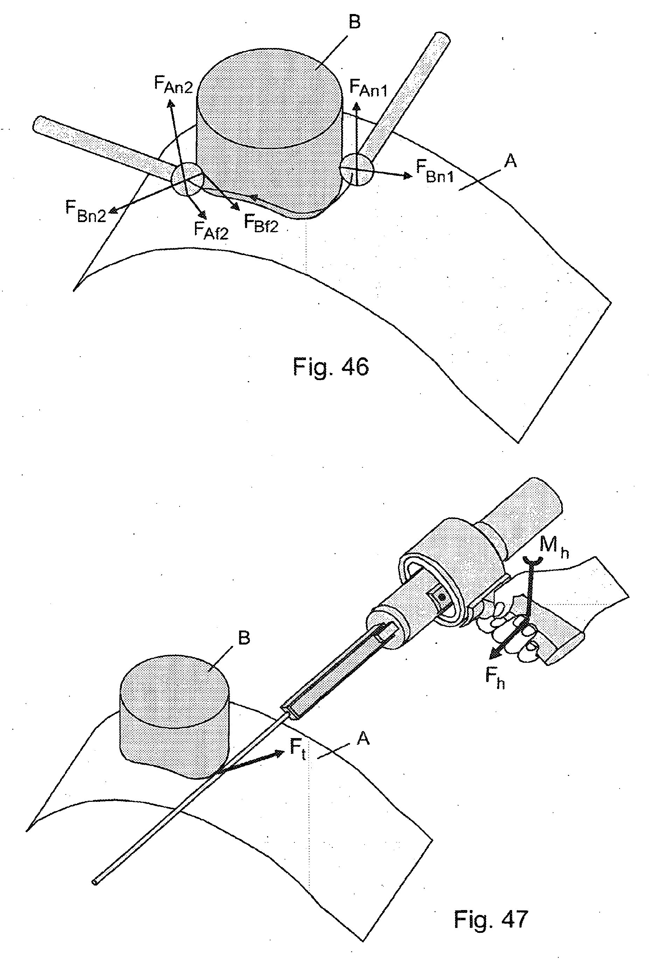

Another common situation is that measurements of points are needed in the interface between two objects as illustrated in figure 46, where object B is situated on or belonging to object A. Also in this case the tool can either be used to register isolated points or to register points during movement of the tool in the joint between objects A and B. Since the tool is constrained by two surfaces with an angle to each other, two normal forces are obtained, F_{Ani} normal to the surface of object A and F_{Bni} normal to the surface of object B. Of course, there are also two friction force components, one for each object surface.

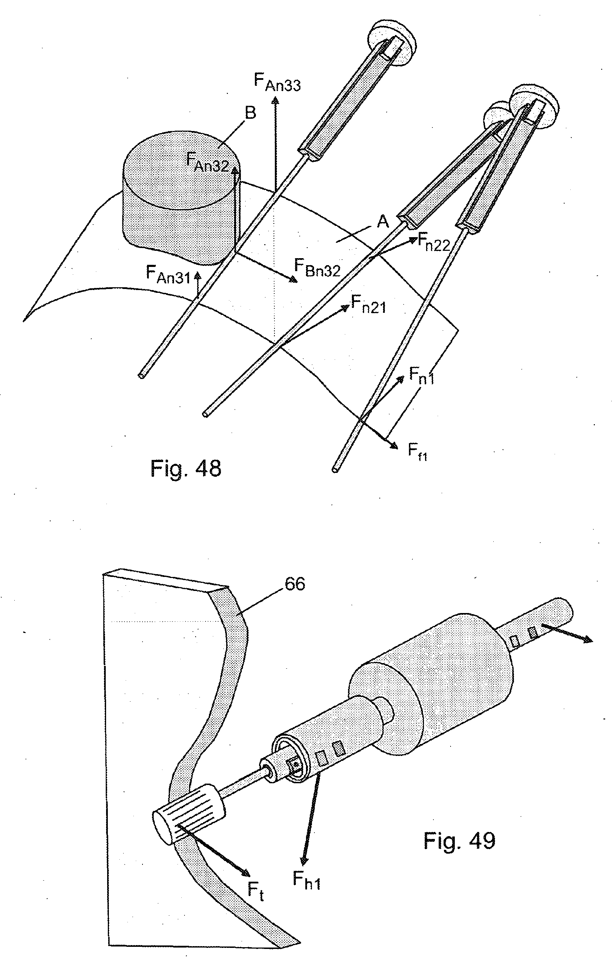

Figure 47 shows a use case when manipulating the tool dummy 118 in figure 21 for the programming of a motion to cut off part B from part A using an oxy-fuel burner. Now the dummy tool may have several contact points with the surface A and when approaching part B also a contact point with this object is obtained. Figure 48 exemplifies different interaction situations between the dummy tool and the surface of object A and at left the tool is also in contact with object B. It is evident that it is more difficult to find easy to manipulate control solutions for Figure 48 than for the use cases with well-defined point contacts.

Figure 49 exemplifies the programming of deburring or deflashing of an edge 26 using the tool design 116 according to Figure 21. Now both hands are involved giving two handle forces (Fₕ₁ and Fₕ₂) to manipulate the tool. The interaction force (Fₜ) has a well defined position on the tool and the programming should be relatively easy to perform.

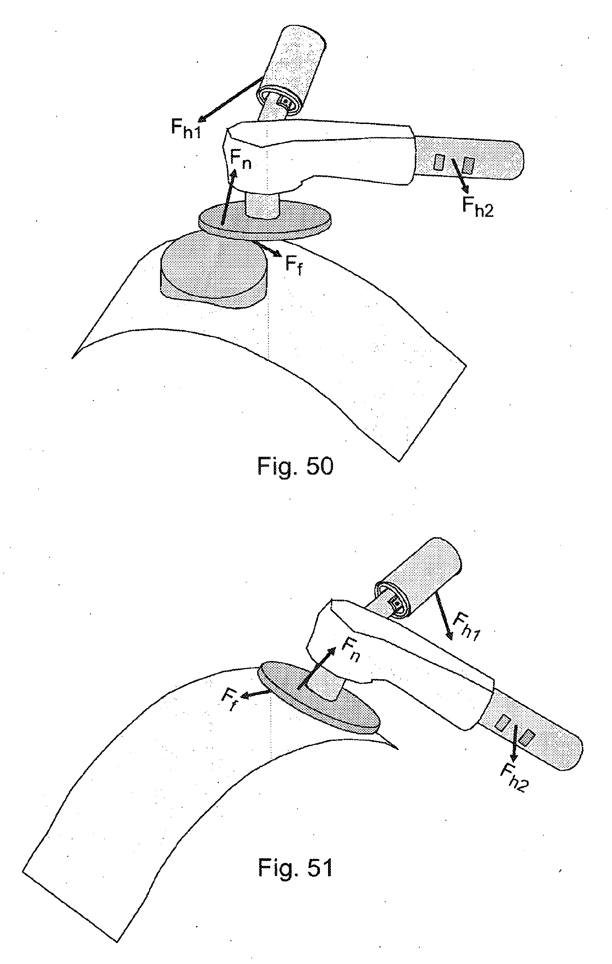

Figure 50 shows the case of stub grinding. Here the grinding disc dummy is programmed to move in a certain repeated pattern over the stub. The manipulation of the dummy tool during programming is made by mainly two handle forces and the tool force and its contact point on the dummy grinding disc is measured.

Figure 51 gives an example of another use case, which corresponds to grinding or polishing of a surface. In this case the dummy tool should be kept aligned with the surface and this case should be easier than the use case in Figure 50 since the interaction between the tool and the object is better defined.

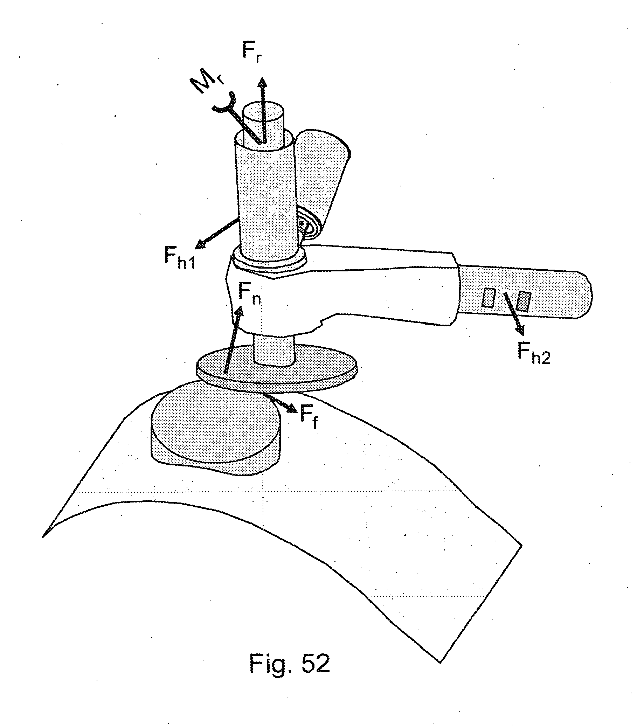

Figure 52 shows the case of stub grinding when the real tool is used and the programming is made during grinding.

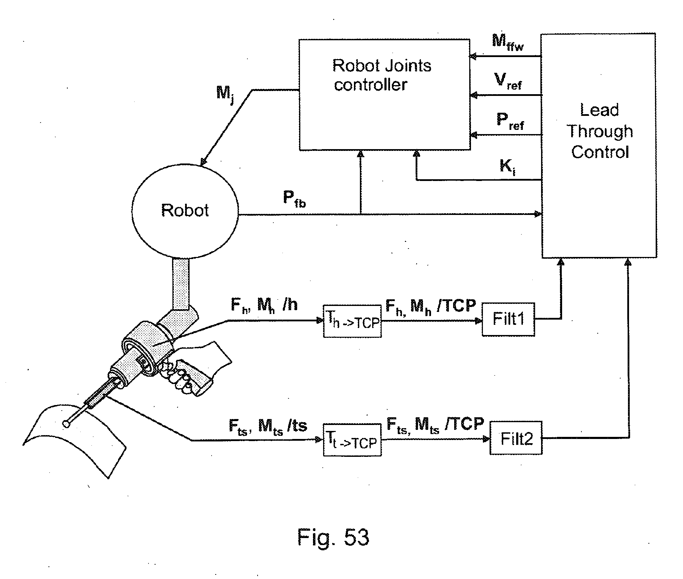

Figure 53 outlines the main structure of the control system for the implementation of the lead-through programming. The simplest use case with individual surface point measurements according to figure 45a is shown in the figure and the forces and torques measured in the handle force-torque sensor and the dummy tool force-torque sensor are used as inputs to the controller. The Cartesian control is performed in the tool coordinate system with TCP in the centre of the ball that touches the surface that will be measured. Thus, the forces and torques measured in the handle and the tool are transformed to forces and torques in the tool coordinate system at TCP (**F**ₕ, **M**ₕ /**TCP** and **F**ₜₛ, **M**ₜₛ /**TCP**). After filtering, these signals form the input to the Lead-through Controller, which generates reference positions, reference speeds and feed forward torques to the Joints controller of the robot.

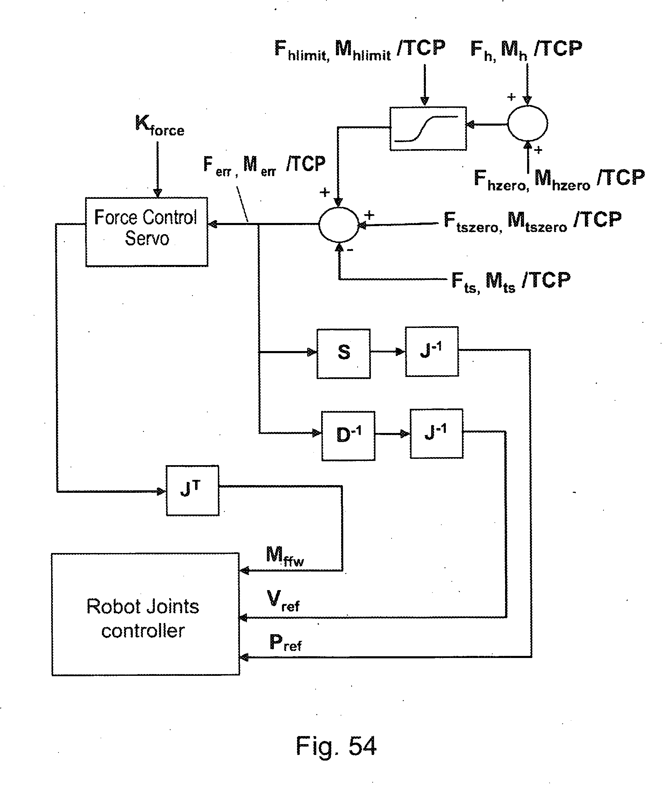

Figure 54 exemplifies one possible design of the Lead-through Controller. The handle force-torque measurements transformed to the tool coordinate system (**F**ₕ, **M**ₕ /**TCP**) are used as references and the actual forces/torques are obtained from the tool force-torque sensor (**F**ₜₛ, **M**ₜₛ /**TCP**). The force/torque error is in the general case used for force, impedance and/or admittance control. In pure force control mode the transfer functions **S** and **D⁻¹** are set at 0 and in pure admittance control **K_{force}** and **S** are set at 0 and for impedance control **K_{force}** and **D**⁻¹ are set at zero. **F_{tszero}**, **M_{tszero}** /**TCP** and **F_{hzero}**, **M_{hzero}** /**TCP** are the sensor offsets and gravity compensation signals for the force-torque sensors, signals that are updated each time the operator releases the handle. The limitations **F**ₕₗᵢₘᵢₜ, **M**ₕₗᵢₘᵢₜ /**TCP** work individually on the 6 components of the reference signal and are used to limit the interaction forces/torques.

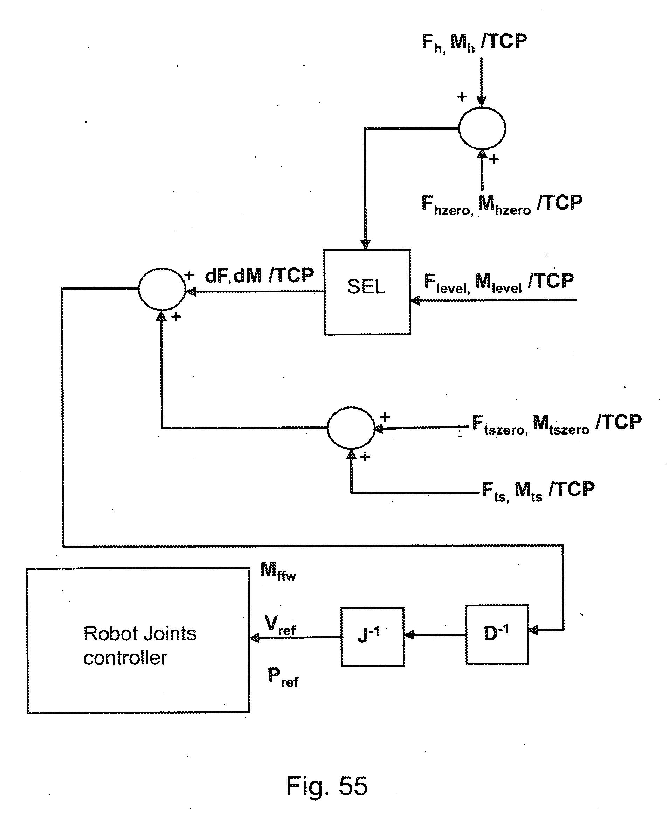

The output from the handle force-torque sensor can also be used just to determine the direction of the movement of the tool as shown in Figure 55. The module SEL is a selector that calculates the handle force and torque directions and generates force and torque increments (dF, dM /TCP) in this direction to be fed into the admittance control filter giving the tool a speed reference in this direction. At contact the force/torque signals from the tool sensor will give an opposite movement and the result will be that the tool will stay at a light interaction until the operator changes the directions of its manipulation and the tool moves in a new direction or rotates around an axis with a new direction. The selector:could include intelligence using larger increments when no forces or torques are measured by the tool sensor and then use smaller increments or pulsed increments at lower frequency when a contact is obtained.

In principle, the above control structures could work in all the use cases. For the tools in figures 49 - 52, the two force-torque sensors of the two handles share the 6DOF to manipulate the tool. This means that half of the force/torque references from the handles when calculated in the tool coordinate system are not used or that a weight is set on each DOF coming from each of the handle force-torque sensors.

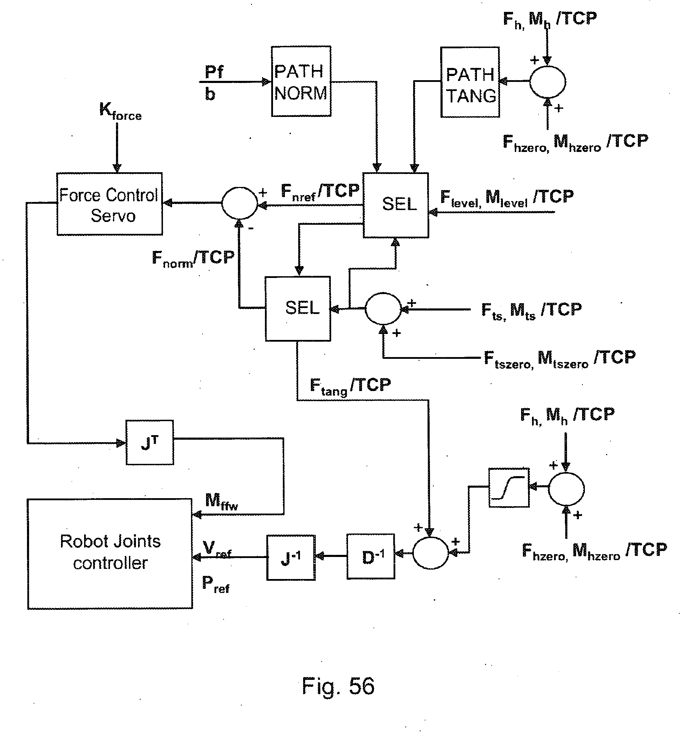

The basic control schemes may, of course, be supplemented with functionalities to increase the user friendliness of the lead-through programming. One example is given in Figure 56, where force controlled surface tracking is started when a contact is obtained between the tool and the work object. Other such functionalities are locking of tool orientation, rotate tool around TCP, circle generation, straight line generation, trajectory smoothing, CAD model adaptation, program editing by lead-through, speech communication for data input etc.

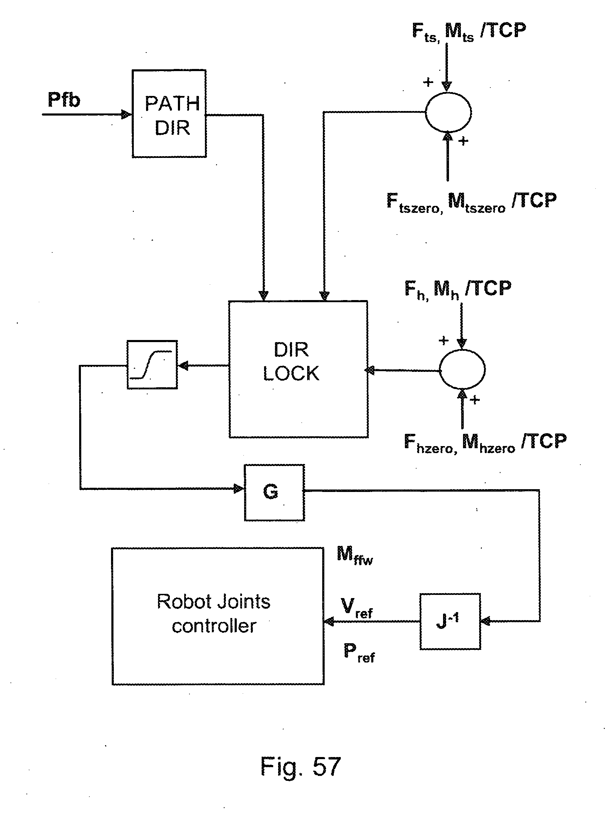

One problem using admittance-, impedance- and force-control loops is that it is difficult to obtain a high bandwidth, which may give the operator the feeling of a slowly responding system. One way to improve the responsiveness of the system is to use the signals from the force-torque sensor in the handle to directly control the speed reference and even the torque feed forward signals to the robot joints controller as shown in Figure 57. In order to control the interaction forces between the tool and the work object the signals from the force-torque sensor is then used to control which directions of the forces/torques from the handle that are accepted to send to the joints controller. This is made by the Direction Locking module (DIR LOCK) in Figure 57. Different strategies can be implemented in this module. For example, if the force in one direction is above a certain value, only force references adding no more force in this direction (and torque references) are accepted to go to the joints servo. In order to obtain a fast identification of the force direction at the first touch of the object, the motion direction of the tool before the touch can be used. It is then also possible to make a ramped or filtered locking of the critical force component. Using this concept, for example, two force directions will be locked, but the operator can still move the tool along the joint between the geometries A and B and also change the orientation of the tool. A tool includes, besides processing tools, also grippers and fixtures to handle work objects.

## Claims

1. A system for controlling the position and orientation of an object (1,3), wherein the system comprises:
- a measuring assembly (6;67;119) including a first (7;68; 130) and a second part (8; 72; 129) wherein the first part is adapted to receive forces and torques from a user, and a sensor (9a;73;9b) adapted to measure forces and torques caused by changes in position and orientation of the first part in relation to the second part, and
- a data processing unit (18) adapted to receive measuring data from said sensor and based thereon controlling the position and orientation of the object,
**characterized in that** said sensor comprises a semiconductor chip with integrated sensor elements (198), and the measuring assembly comprises a spring arrangement (11;74a-c;128,126) mounted between the first and second parts and mechanically connected to the sensor, for converting forces and torques from the user to changes in position and orientation of said first part in relation to said second part, and said sensor is adapted to measure forces and torques from the spring arrangement caused by the changes in position and orientation of the first part relative the second part, wherein said sensor includes an outer plate (10a;10b) and an inner plate (12a; 12b), which are mechanically connected by at least three beams (14a;14b), each provided with at least two piezoresistive sensor elements.

2. The system according to claim 1, wherein the spring arrangement is two-dimensional and comprises an outer part (184) resiliently connected to an inner part (182) resiliently connected to a sensor attachment (180) mechanically connected to the outer or inner plate (176,177) of the sensor, and an elongated element (179) having one end mechanically connected to the outer part (184), and the other end mechanically connected to the other plate (176,177) of the sensor.

3. The system according to claim 2, wherein said outer and inner parts (182,184) of the spring arrangement are ring-shaped.

4. The system according to any of the previous claims, wherein the sensor comprises at least six beams (14a;197) provided with at least one piezoresistive sensor element (198) each.

5. The system according to claim 4, wherein the beams (14a;197) are arranged in pairs extending in orthogonal directions between the outer and inner plate.

6. The system according to any of the previous claims, wherein the spring arrangement comprises at least one three-dimensional spring (11;208a-b;221;223) disposed between the first or the second part of the measuring assembly and mechanically connected to the sensor.

7. The system according to any of the previous claims, wherein the spring arrangement comprises a first spring entity (221a) mounted between the first and second parts of the measuring assembly and mechanically connected to the sensor, and a second spring entity (221 b) arranged between the first and second part of the measuring assembly to take up some of the forces and torques from the user.

8. The system according to any of the previous claims, wherein the spring arrangement includes at least three springs (221;223) positioned at different locations between the first and second parts.

9. The system according to any of the previous claims, wherein the sensor is mounted on a substrate (203) with essentially the same temperature coefficient as the sensor material.

10. The system according to claim 9, wherein the substrate (203) is attached to the measuring assembly via a metal part (204a) with a smaller diameter (d) than the substrate.

11. The system according to claim 9, wherein an element (262) with essentially the same temperature coefficient, as compared with the sensor material, and a thickness equal to the thicknesses of the sensor plus the thicknesses of the substrate, is arranged to cancel the temperature coefficient differences between the sensor and its surroundings.

12. The system according to any of the previous claims, wherein the second part (8;72;129) of the measuring assembly is adapted to be mechanically connected to an object (1) carried by an industrial robot (2) having a plurality of joints, and said data processing unit is adapted to control the positions of the joints of the robot carrying the object.

13. The system according to claim 12, wherein the object (1) is rotationally symmetrical, and the system comprises a handle (30;52) mechanically connected to the first part of the measuring assembly and rotatably arranged around the symmetric line of the object or an axis in parallel with the symmetric line of the object.

14. The system according to claim 13, wherein the system comprises a bearing (32;35) having its rotational axis coinciding or in parallel with the symmetric line of the object and arranged between the handle and the first part of the measuring assembly.

15. The system according to claim 13 or 14, wherein the system comprises a locking mechanism (88,89,90,91), which upon activation locks the handle at a fixed rotation angle in relation to the symmetric line of the object.

16. The system according to claim 13, wherein the measuring assembly (38a-b) is disposed in the handle.

17. The system according to any of the claims 13-18, wherein the system comprises a lead-through interface (34,36) adapted to be mechanically connected to the tool and comprising said bearing (35) and said handle.

18. The system according to any of the previous claims, wherein the system further comprises a second measuring assembly (38c;38d;55b;97;100a;113) including:
a first and a second part, wherein the first part is adapted to receive forces and torques,
a second spring arrangement mounted between the first and second part of the second measuring assembly, for converting said forces and torques to changes in position and orientation of said first part of the second measuring assembly in relation to the second part of the second measuring assembly, and
a second sensor mechanically connected to the second spring arrangement, for measuring forces and torques caused by changes in position and orientation of the first part in relation to the second part, the sensor comprising a semiconductor chip with integrated sensor elements, and
said data processing unit is arranged to receive measuring data from said second sensor and based thereon take part in the control of the position and orientation of the object.

19. The system according to claim 18, wherein the second measuring assembly (113) is adapted to measure forces and torques developed between a tool and a work object.

20. The system according to 18, wherein the system comprises a second handle (54) fixedly arranged relative to the object and mechanically connected with the first part of said second measuring assembly, and said data processing unit (18) is arranged to take part in the control of the position and the orientation of the object based on measuring data from said second sensor.

21. The system according to 18, wherein the system comprises a second handle (54) fixedly arranged relative to the object and mechanically connected with the first part of said second measuring assembly, and said data processing unit (18) is arranged to mainly control the position of the object based on measuring data from said first sensor (38) and to mainly control the orientation of the object based on measuring data from said second sensor.

## Patentansprüche

1. System zum Steuern der Position und Orientierung eines Objekts (1,3), wobei das System aufweist:
- eine Messvorrichtung (6;67;119) mit einem ersten (7;68;130) und einem zweiten Teil (8;72;129), wobei der erste Teil zur Aufnahme von Kräften und Drehmomenten von einem Benutzer in der Lage ist, und mit einem Sensor (9a;73;9b), der zum Messen von Kräften und Drehmomenten in der Lage ist, die durch Veränderungen in der Position und Orientierung des ersten Teils in Relation zu dem zweiten Teil verursacht werden, und
- eine Datenverarbeitungseinheit (18), die in der Lage ist, Messdaten von dem Sensor zu empfangen und auf deren Basis die Position und Orientierung des Objekts zu steuern,
**dadurch gekennzeichnet, dass** der Sensor einen Halbleiterchip mit integrierten Sensorelementen (198) aufweist und die Messvorrichtung eine Federanordnung (11;74a-c;128;126) aufweist, die zwischen den ersten und zweiten Teilen angeordnet ist und mechanisch mit dem Sensor verbunden ist, um Kräfte und Drehmomente von dem Benutzer in Veränderungen der Position und Orientierung des ersten Teils in Relation zu dem zweiten Teil umzusetzen, und dass der Sensor in der Lage ist, Kräfte und Drehmomente von der Federanordnung zu messen, die durch die Veränderungen in der Position und Orientierung des ersten Teils relativ zu dem zweiten Teil verursacht werden, wobei der Sensor eine äußere Platte (10a;10b) und eine innere Platte (12a,12b) aufweist, die durch mindestens drei Streben (14a;14b) mechanisch miteinander verbunden sind, wobei jede der Platten mit mindestens zwei piezoresistiven Sensorelementen versehen ist.

2. System nach Anspruch 1, bei dem die Federanordnung zweidimensional ist und einen äußeren Teil (184), der elastisch mit einem inneren Teil (182) verbunden ist, welcher elastisch mit einer mechanisch an der äußeren oder der inneren Platte (176,177) des Sensors befestigten Sensorbefestigungsvorrichtung (180) verbunden ist, und ein längliches Element (179) aufweist, das an einem Ende mechanisch mit dem äuβeren Teil (184) und an dem anderen Ende mechanisch mit der anderen Platte (176,177) des Sensors verbunden ist.

3. System nach Anspruch 2, bei dem die äußeren und inneren Teile (182, 184) der Federvorrichtung ringförmig sind.

4. System nach einem der vorhergehenden Ansprüche, bei dem der Sensor mindestens sechs Streben (14a;197) aufweist, von denen jede mit mindestens einem piezoresistiven Sensorelement (198) versehen ist.

5. System nach Anspruch 4, bei dem die Streben (14a;197) in Paaren angeordnet sind, die in orthogonalen Richtungen zwischen der äußeren und der inneren Platte verlaufen.

6. System nach einem der vorhergehenden Ansprüche, bei dem die Federanordnung mindestens eine dreidimensionale Feder (11;208a-b; 221;223) aufweist, die zwischen dem ersten oder dem zweiten Teil der Messvorrichtung angeordnet ist und mechanisch mit dem Sensor verbunden ist.

7. System nach einem der vorhergehenden Ansprüche, bei dem die Federanordnung eine erste Federeinheit (221a), die zwischen dem ersten und dem zweiten Teil der Messvorrichtung angeordnet ist und mechanisch mit dem Sensor verbunden ist, und eine zweite Federeinheit (221b) aufweist, die zwischen dem ersten und dem zweiten Teil der Messvorrichtung angeordnet ist, um einen Anteil der Kräfte und Drehmomente von dem Benutzer aufzunehmen.

8. System nach einem der vorhergehenden Ansprüche, bei dem die Federanordnung mindestens drei Federn (221;223) aufweist, die an verschiedenen Stellen zwischen den ersten und zweiten Teilen positioniert sind.

9. System nach einem der vorhergehenden Ansprüche, bei dem der Sensor auf einem Substrat (203) mit im Wesentlichen dem gleichen Temperaturkoeffizienten wie demjenigen des Sensormaterials angeordnet ist.

10. System nach Anspruch 9, bei dem das Substrat (203) über einen Metallteil (204a), der einen kleineren Durchmesser (d) als das Substrat hat, an der Messvorrichtung befestigt ist.

11. System nach Anspruch 9, bei dem ein Element (262), das im Vergleich zu dem Sensormaterial im Wesentlichen den gleichen Temperaturkoeffizienten hat und eine Dicke hat, die gleich der Dicke des Sensors plus der Dicke des Substrats ist, derart angeordnet ist, dass es die Temperaturkoeffizient-Differenzen zwischen dem Sensor und seiner Umgebung beseitigt.

12. System nach einem der vorhergehenden Ansprüche, bei dem der zweite Teil (8;72;129) der Messvorrichtung mechanisch mit einem Objekt (1) verbindbar ist, das von einem mehrere Gelenke aufweisenden Industrieroboter (2) gehalten ist, und die Datenverarbeitungseinheit in der Lage ist, die Positionen der Gelenke des das Objekt haltenden Roboters zu steuern.

13. System nach Anspruch 12, bei dem das Objekt (1) drehsymmetrisch ist und das System einen Griff (30,52) aufweist, der mechanisch mit dem ersten Teil der Messvorrichtung verbunden ist und um die Symmetrielinie des Objekts oder eine parallel zur Symmetrielinie des Objekts verlaufende Achse drehbar angeordnet ist.

14. System nach Anspruch 13, wobei das System ein Lager (32;35) aufweist, dessen Drehachse mit der Symmetrielinie des Objekts übereinstimmt oder parallel zu dieser verläuft und das zwischen dem Griff und dem ersten Teil der Messvorrichtung angeordnet ist.

15. System nach Anspruch 13 oder 14, wobei das System einen Verriegelungsmechanismus (88,89,90,91) aufweist, der bei Aktivierung den Griff an einem festgelegten Drehwinkel relativ zu der Symmetrielinie des Objekts verriegelt.

16. System nach Anspruch 13, bei dem die Messvorrichtung (38a-b) in dem Griff angeordnet ist.

17. System nach einem der Ansprüche 13-18, wobei das System ein Durchführungs-Interface (34,36) aufweist, das mechanisch mit dem Werkzeug verbindbar ist und das Lager (35) und den Griff aufweist.

18. System nach einem der vorhergehenden Ansprüche, wobei das System ferner eine zweite Messvorrichtung (38c;38d;55b;97;100a;113) aufweist, die enthält:
einen ersten und einen zweiten Teil, wobei der erste Teil zur Aufnahme von Kräften und Drehmomenten in der Lage ist,
eine zweite Federanordnung, die zwischen dem ersten und dem zweiten Teil der zweiten Messvorrichtung angeordnet ist, um die Kräfte und Drehmomente in Veränderungen der Position und Orientierung des ersten Teils der zweiten Messvorrichtung in Relation zu dem zweiten Teil der zweiten Messvorrichtung umzusetzen, und
einen zweiten Sensor, der mechanisch mit der zweiten Federanordnung verbunden ist, um Kräfte und Drehmomente zu messen, die durch Veränderungen in der Position und Orientierung des ersten Teils in Relation zu dem zweiten Teil verursacht werden, wobei der Sensor einen Halbleiterchip mit integrierten Sensorelementen aufweist, und
wobei die Datenverarbeitungseinheit derart ausgelegt ist, dass sie Messdaten von dem zweiten Sensor empfängt und auf deren Basis an der Steuerung der Position und Orientierung des Objekts teilnimmt.

19. System nach Anspruch 18, bei dem die zweite Messvorrichtung (113) in der Lage ist, sich zwischen einem Werkzeug und einem Arbeitsobjekt entwickelnde Kräfte und Drehmomente zu messen.

20. System nach Anspruch 18, wobei das System einen zweiten Griff (54) aufweist, der relativ zu dem Objekt fest angeordnet ist und mechanisch mit dem ersten Teil der zweiten Messvorrichtung verbunden ist, und die Datenverarbeitungseinheit (18) derart ausgelegt ist, dass sie auf Basis von Messdaten von dem zweiten Sensor an der Steuerung der Position und Orientierung des Objekts teilnimmt.

21. System nach Anspruch 18, wobei das System einen zweiten Griff (54) aufweist, der relativ zu dem Objekt fest angeordnet ist und mechanisch mit dem ersten Teil der zweiten Messvorrichtung verbunden ist, und die Datenverarbeitungseinheit (18) derart ausgelegt ist, dass sie die Position des Objekts hauptsächlich basierend auf Messdaten von dem ersten Sensor (38) steuert und die Orientierung des Objekts hauptsächlich basierend auf Messdaten von dem zweiten Sensor steuert.

## Revendications

1. Système de commande de la position et de l'orientation d'un objet (1, 3), dans lequel le système comprend :
- un ensemble (6 ; 67 ; 119) de mesure comprenant une première (7 ; 68 ; 130) et une deuxième partie (8 ; 72 ; 129) la première partie étant conçue pour recevoir des forces et des couples d'un utilisateur, et un capteur (9a ; 73 ; 9b) conçu pour recevoir des forces et des couples provoqués par des modifications de position et d'orientation de la première partie par rapport à la deuxième partie, et
- une unité (18) informatique conçue pour recevoir des données de mesure du capteur et sur cette base pour commander la position et l'orientation de l'objet, **caractérisé en ce que** le capteur comprend une puce à semiconducteur ayant des éléments (198) intégrés de capteur et l'ensemble de mesure comprend un agencement (11 ; 74a-c ; 128, 126) à ressort monté entre les première et deuxième parties et relié mécaniquement au capteur pour transformer des forces et des couples de l'utilisateur en des modifications de position et d'orientation de la première partie par rapport à la deuxième partie, et le capteur est conçu pour mesurer des forces et des couples de l'agencement à ressort provoqués par les modifications de position et d'orientation de la première partie par rapport à la deuxième partie, le capteur comprenant un plateau (10a, 10b) extérieur et un plateau (12a ; 12b) intérieur qui sont reliés mécaniquement par au moins trois poutrelles (14a ; 14b) chacune munie d'au moins deux éléments piézorésistifs de capteur.

2. Système suivant la revendication 1, dans lequel l'agencement à ressort est à deux dimensions et comprend deux parties (184) extérieures reliées élastiquement à une partie (182) intérieure reliée élastiquement à une fixation (180) de capteur reliée mécaniquement à l'extérieur du plateau (176, 177) intérieur du capteur et un élément (179) oblong ayant une extrémité reliée mécaniquement à la partie (184) extérieure et l'autre extrémité reliée mécaniquement à l'autre plateau (176, 177) du capteur.

3. Système suivant la revendication 2, dans lequel les parties (182, 184) extérieure et intérieure de l'agencement à ressort sont annulaires.

4. Système suivant l'une quelconque des revendications précédentes, dans lequel le capteur comprend au moins six poutrelles (14a ; 197) munies chacune d'au moins un élément (198) piézorésistif de capteur.

5. Système suivant la revendication 4, dans lequel les poutrelles (14a ; 197) sont disposées par paire en s'étendant dans une direction orthogonale entre le plateau extérieur et le plateau intérieur.

6. Système suivant l'une quelconque des revendications précédentes, dans lequel l'agencement à ressort comprend au moins un ressort (11 ; 208a-b ; 221 ; 223) en trois dimensions disposé entre la première ou la deuxième partie de l'ensemble de mesure et relié mécaniquement au capteur.

7. Système suivant l'une quelconque des revendications précédentes, dans lequel l'agencement à ressort comprend une première entité (221a) à ressort montée entre la première et la deuxième partie de l'ensemble de mesure et reliée mécaniquement au capteur, et une deuxième entité (221b) à ressort disposée entre la première et la deuxième partie de l'ensemble de mesure pour absorber certaines des forces et certains des couples provenant de l'utilisateur.

8. Système suivant l'une quelconque des revendications précédentes, dans lequel l'agencement à ressort comprend au moins trois ressort (221 ; 223) placés en des emplacements différents entre la première et la deuxième partie.

9. Système suivant l'une quelconque des revendications précédentes, dans lequel le capteur est monté sur un substrat (203) ayant sensiblement le même coefficient de température que le matériau du capteur.

10. Système suivant la revendication 9, dans lequel le substrat (203) est fixé à l'ensemble de mesure par l'intermédiaire d'une partie (204a) métallique ayant un diamètre (d) plus petit que le substrat.

11. Système suivant la revendication 9, dans lequel un élément (262), ayant sensiblement le même coefficient de température que le matériau du capteur et une épaisseur égale à l'épaisseur du capteur plus l'épaisseur du substrat, est disposé de manière à annuler les différences de coefficients de température entre le capteur et ce qui l'entoure.

12. Système suivant l'une quelconque des revendications précédentes, dans lequel la deuxième partie (8 ; 72 ; 129) de l'ensemble de mesure est conçue pour être reliée mécaniquement à un objet (1) porté par un robot (2) industriel ayant une pluralité d'articulations, et l'unité informatique est conçue pour commander les positions des articulations du robot portant l'objet.

13. Système suivant la revendication 12, dans lequel l'objet (1) est de révolution et le système comprend une poignée (30 ; 52) reliée mécaniquement à la première partie de l'ensemble de mesure et montée à rotation autour de la ligne de symétrie de l'objet ou d'un axe parallèle à la ligne de symétrie de l'objet.

14. Système suivant la revendication 13, dans lequel le système comprend un palier (32 ; 35) dont l'axe de rotation coïncide avec la ligne de symétrie de l'objet ou y est parallèle et disposé entre la poignée et la première partie de l'ensemble de mesure.

15. Système suivant la revendication 13 ou 14, dans lequel le système comprend un mécanisme (88, 89, 90, 91) de verrouillage qui, après activation, verrouille la poignée à un angle de rotation fixé par rapport à la ligne de symétrie de l'objet.

16. Système suivant la revendication 13, dans lequel l'ensemble (38a-b) de mesure est disposé dans la poignée.

17. Système suivant l'une quelconque des revendications 13 à 18, dans lequel le système comprend une interface (34, 36) de traversée conçue pour être reliée mécaniquement à l'outil et comprenant le palier (35) et la poignée.

18. Système suivant l'une quelconque des revendications précédentes, dans lequel le système comprend, en outre, un deuxième ensemble (38c ; 38d ; 55b ; 97 ; 100a ; 113) de mesure comportant :
une première et une deuxième parties, la première partie étant conçue pour recevoir des forces et des couples,
un deuxième agencement à ressort, monté entre la première et la deuxième parties du deuxième ensemble de mesure pour transformer les forces et les couples en des modifications de position et d'orientation de la première partie du deuxième ensemble de mesure par rapport à la deuxième partie du deuxième ensemble de mesure, et
un deuxième capteur relié mécaniquement au deuxième agencement à ressort pour mesurer des forces et des couples provoqués par des modifications de position et d'orientation de la première partie par rapport à la deuxième partie, le capteur comprenant une puce à semiconducteur ayant des éléments intégrés de capteur, et
l'unité informatique est conçue pour recevoir des données de mesures du deuxième capteur et sur cette base pour prendre part à la commande de la position et de l'orientation de l'objet.

19. Système suivant la revendication 18, dans lequel le deuxième ensemble (113) de mesure est conçu pour mesurer des forces et des couples développés entre un outil et une pièce.

20. Système suivant la revendication 18, dans lequel le système comprend une deuxième poignée (54) disposée de manière fixe par rapport à l'objet et reliée mécaniquement à la première partie du deuxième ensemble de mesure et l'unité (18) informatique est conçue pour prendre part à la commande de la position et de l'orientation de l'objet sur la base de données de mesure provenant du deuxième capteur.

21. Système suivant la revendication 18, dans lequel le système comprend une deuxième poignée (54) disposée de manière fixe par rapport à l'objet et reliée mécaniquement à la première partie du deuxième ensemble de mesure, et l'unité (18) informatique est conçue pour commander principalement la position de l'objet sur la base de données de mesure, provenant du premier capteur (38) et pour commander principalement l'orientation de l'objet sur la base de données de mesure provenant du deuxième capteur.
